(19) Europäisches Patentamt
European Patent Office
Office européen des brevets

(11) **EP 1 871 105 A1**

(12) **EUROPEAN PATENT APPLICATION**
published in accordance with Art. 153(4) EPC

(43) Date of publication:
**26.12.2007 Bulletin 2007/52**

(51) Int Cl.:
*H04N 5/76* (2006.01)    *G06F 17/30* (2006.01)
*G06T 1/00* (2006.01)    *H04N 5/225* (2006.01)

(21) Application number: **05727849.1**

(22) Date of filing: **29.03.2005**

(86) International application number:
**PCT/JP2005/005907**

(87) International publication number:
**WO 2006/103744 (05.10.2006 Gazette 2006/40)**

(84) Designated Contracting States:
**DE FR GB**

(71) Applicant: **FUJITSU LIMITED**
**Kawasaki-shi,**
**Kanagawa 211-8588 (JP)**

(72) Inventors:
• **SHIMIZU, Seiya,**
**FUJITSU LIMITED**
**Kawasaki-shi, Kanagawa 2118588 (JP)**

• **KITAURA, Asako,**
**FUJITSU LIMITED**
**Kawasaki-shi, Kanagawa 2118588 (JP)**

• **MASUI, Motoo,**
**FUJITSU LIMITED**
**Kawasaki-shi, Kanagawa 2118588 (JP)**

(74) Representative: **HOFFMANN EITLE**
**Patent- und Rechtsanwälte**
**Arabellastrasse 4**
**81925 München (DE)**

(54) **VIDEO MANAGING SYSTEM**

(57)    A video management system comprises a calculating unit calculating, with respect to each of a plurality of size orders, a minimum bounding region (MBR) embracing a view volume that defines a range to be shot in real space based on pieces of data representing a shooting position and a shooting direction of a video, and a management unit storing, as data representing a shooting range of a video of a management target, data representing the MBR corresponding to each of the plurality of size orders that is calculated by the calculating unit, in a storage.

*FIG. 5*

EP 1 871 105 A1

**Description**

Technical Field

The present invention relates to a technology for searching for (retrieving) a video segment, in which a specified object is shot, from a large quantity of accumulated video data.

Background Arts

Some inventions were proposed as methods of extracting a specified object image from a massive quantity of accumulated video data. For instance, there is "Image Search Device and Image Search System" disclosed in Patent document 1.

Camera parameters (an angle of view etc), coordinates of a camera position (the latitude and the longitude) and a direction of an optical axis (pan, tilt, yaw) at the time of shooting a video, are recorded as time-series metadata on a frame-by-frame basis. A view volume (shooting space) upon shooting a video is calculated from pieces of information such as the camera parameters, the coordinates of the position and the optical-axis direction.

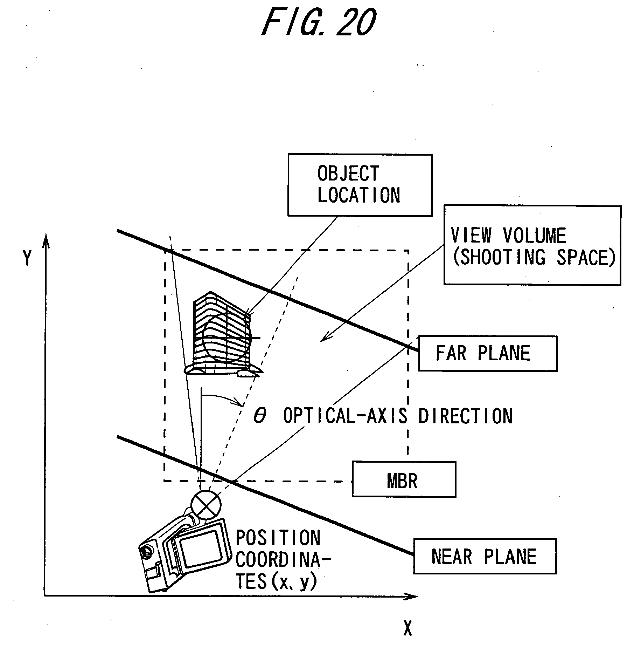

The view volume may be, as illustrated in FIG. 20, defined as, e.g., a trapezoidal area circumscribed by straight lines indicating a near plane and a far plane with respect to a camera shooting position on an X-Y plane (horizontal plane) and by respective straight lines that define a horizontal view angle of the camera. The view volume might be defined as a triangular area in some cases.

It is determined whether or not the view volume embraces (includes) a location of an object that should be searched for, thereby enabling determination as to whether the object is shot within the video or not. This determination may be made on the frame-by-frame basis.

If a determining process is executed for every frame, a searching cost (a period of search time, a CPU load, a memory capacity, etc) rises. Therefore, in the case of implementing a search system, an MBR (circumscribed quadrangle : Minimum Bounding Region or Minimum Bounding Rectangle)) of the view volume is previously calculated for every plurality of video subsets (shot, file, etc).

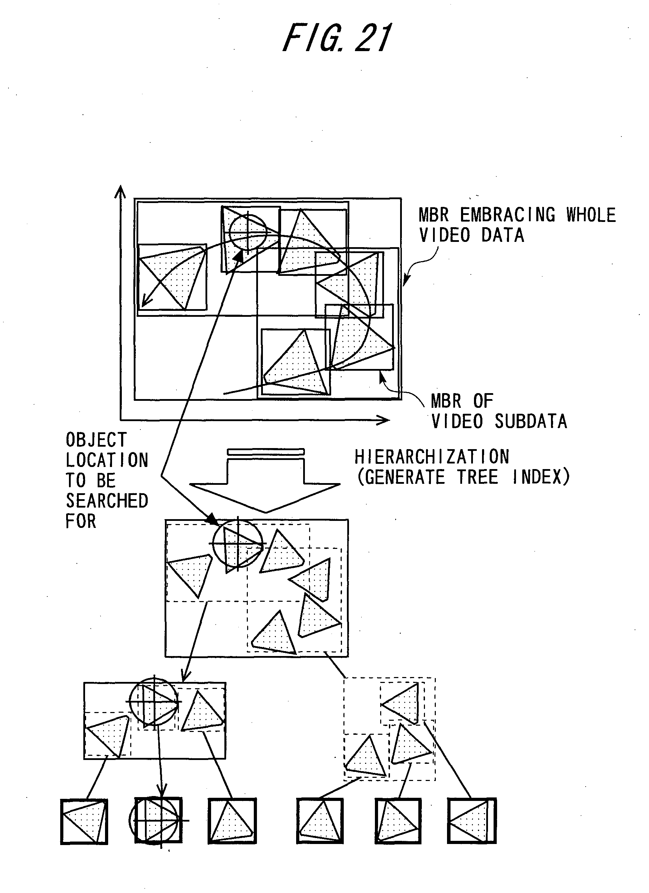

To be specific, as illustrated at an upper part in FIG. 21, for example, a plurality of shots exists as video subdata, a circumscribed quadrangle (MBR: Minimum Bounding Region) for the view volume of each shot is calculated. An example shown in FIG. 21 shows six pieces of video subdata (shots), wherein the view volume and the MBR of each piece of video subdata are specified.

Moreover, an MBR (of the video subsets) including the MBRs of respective pieces of video subdata can be defined as an MBR embracing (including) the whole video data. In this case, upon searching for the video, it is determined whether or not a location of the object exists within the MBR of the video subsets. If the location of the object does not exist within the MBR of the video subsets, the searching process for the video subsets is not executed. This scheme enables the searching cost to be reduced.

The video subsets and the MBR thereof are stored in an as-is status in a database (e.g., a table). Alternatively, the video subsets and the MBR thereof are attached with indexes, whereby hierarchical data management is conducted in a tree structure using R-trees etc. For example, as shown at a lower part in FIG. 21, the MBR of the video subsets is set as a root, the MBRs of the video subdata, which are included in the MBR (root), are divided corresponding to positions thereof (refer to intermediate nodes), and the MBRs of the video subdata are stored as the lowest-order nodes.

In the case of adopting the hierarchical structure using the tree index, a data searching cost becomes O(log (N)) with respect to a data count (number) N. This cost is more efficient than a cost O(N) in the case of adopting none of the hierarchical structure. Each time the data is added and deleted, however, it is required that a structure of the tree index be regenerated. Hence, a data management cost has a rising tendency.

In the video search based on the view volume, as the view volume and the MBR become smaller, it gets easier to narrow down the search target. It is therefore necessary to minimize the view volume and the search target in accordance with a size of the object of which the search target is set on the far plane of the view volume.

For instance, if the far plane is set to 10 km far from the shooting position, it is assumed that a car (having a size of several meters) is searched for as the object (search target). In this case, it follows that the car on the far plane exists with a pixel count (number) equal to or smaller than one pixel. Hence, the video (image) of the car on the far plane has no value of being extracted as a search result. Under a setting condition on the far plane, however, this video is contained as one of the search results. Accordingly, the videos contained in the search results increase. It is proper to apply a far plane of, e.g., 1 km or less, to the object such as the car having the size of several meters.

By contrast, if the far plane is set near, an object located equal to or farther than the far plane is not, though actually included in the video, hit in the searching process.

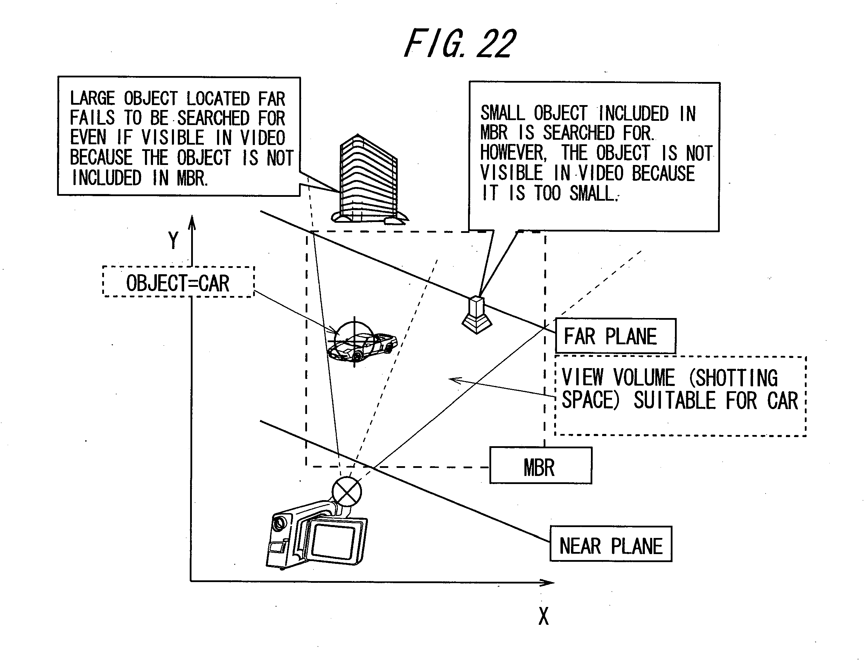

For example, in the picture, existences of a high-rise building or a mountain such as the Land Mark can be recognized through their images even when located several kilometers through several tens kilometers far from the shooting (shooting) position. At this time, if the far plane is set equal to or less than 1 km, it is determined that the high-rise building and the mountain are not embraced by the view volume and are therefore missing from the search results (see FIG. 22).

Therefore, the conventional type of image search alternatively selected one of the following countermeasures.

(1) The system is configured with a view volume corresponding, in a way that presumes a size of the search target, to this presumed object size.

(2) The omission of the search is prevented by adopting a relatively large view volume to allow an increase in searching cost.

Accordingly, the prior art has a problem that the video search is not flexible to the object size.

Patent document 1: Japanese Patent Application Laid-Open Publication No.11-282851

Patent document 2: Japanese Patent Application Laid-Open Publication No. 9-259130

Disclosure of the Invention

Problems to be solved by the Invention

It is an object of the present invention is to provide a technology capable of searching for an image of a specified object captured at a proper cost.

Further, it is another object of the present invention to provide a technology enabling extraction of the image of the specified object captured without any omission.

Means for Solving the Problems

The present invention adopts the following configurations in order to solve the problems.

Namely, the present invention is a video management system comprising:

calculating means calculating, with respect to each of a plurality of size orders, a Minimum Bounding Region (MBR) embracing a view volume that defines a range to be shot in real space based on pieces of data representing a shooting position and a shooting direction of a video; and

management means storing, as data representing a shooting range of a video of a management target, data representing the MBR corresponding to each of the plurality of size orders that is calculated by said calculating means, in a storage.

In the present invention, the video includes a still image and a moving image. The moving image is formed of a plurality of video segments (frames).

According to the present invention, the MBRs corresponding to a plurality of size orders are stored as data representing a shooting range in a storage. Therefore, when searching for the video, a searching cost may be reduced simply by searching for only the MBR giving recognition that the object is shot with a proper size.

Preferably, in the video management system according to the present invention, the calculating means calculates the view volume in a range where an object having a specified size is shot in any one of patterns of being equal to or larger than a fixed pixel size (equal to or larger than, e.g., one pixel size) and a fixed pixel count, and being equal to or larger than the fixed pixel size or the fixed pixel count as well as being equal to or larger than a fixed view angle. With this contrivance, it is feasible to generate the data specifying the shooting range of the video including an image (picture) of an object exhibiting a high utility value.

Preferably, in the video management system according to the present invention, the calculating means calculates an MBR embracing a view volume corresponding to each of a plurality of size orders that are previously defined according to an object size.

Preferably, the video management system according to the present invention further comprises search means determining, when a location and a size of an object are inputted, whether or not the location of the object is embraced by an MBR corresponding to a minimum size order in the plurality of size orders that is larger than the size of the object.

With this contrivance, it is determined whether or not a location of the object is embraced by the MBR in a way that targets at only the MBR giving the recognition that the object is shot with a proper size. This scheme can restrain the searching cost. Further, omission of the search can be prevented by specifying the MBR giving the recognition that the object is shot with the proper size.

Preferably, in the video management system according to the present invention, the calculating means calculates an MBR of a view volume of a representative size order that is common to a plurality of videos being management targets, and calculates a plurality of MBRs of view volumes corresponding to a plurality of size orders defined for the plurality of videos, and

the management means determines a tree structure for hierarchically managing the plurality of videos with the MBR corresponding to the representative size order, generates a tree by use of the tree structure, to store the tree in a storage, the tree including lowest-order nodes each holding data representing the MBRs corresponding to the representative size order and the plurality of size orders with respect to one of the plurality of videos that are calculated by the calculating means, the tree including nodes each having at least one lower-order node, each of the nodes having at least one lower-order node holding data representing an MBR of every size order embracing the respective MBR specified by the data representing the MBRs corresponding to the representative size order and the plurality of size orders held in all of lower-order nodes under the node itself.

This configuration enables efficient management of the plurality of MBRs corresponding to the plurality of size orders. The representative size order may also be one of the plurality of size orders and may also be prepared separately from the plurality of size orders specified with respect to the video.

Further, when adopting this configuration, it follows that a process of modifying the tree related to the MBR of the representative size order may be executed in the case of adding and deleting the video. It is therefore possible to reduce a cost for managing the tree related to the addition/deletion of the video.

Preferably, the video management system according to the present invention further comprises search means determining, as a search MBR, when a location and a size of an object are given, an MBR corresponding to a minimum size order included in size orders prepared in the tree that is larger than the size of the object, and extracting, as one of video search results, information relating to a video corresponding to the search MBR embracing the location of the object searched at a lowest-order node in the tree in a way that traces the search MBR embracing the location of the object sequentially from a root node of the tree.

With this configuration, even when the MBR embracing none of the search target object is included in the MBRs of the plurality of size orders containing the representative size order, the MBR considered to embrace the object is specified and then searched for. This scheme can prevent the omission of the search.

Preferably, in the video management system according to the present invention, the calculating means calculates MBRs corresponding to a plurality of size orders with respect to a plurality of videos being management targets, and the management means determines, on the size order basis, tree structures for hierarchically managing the plurality of videos with the MBRs corresponding to the respective size orders, generates trees each corresponding to each of the plurality of size orders to be stored in a storage, each of the trees including lowest-order nodes each holding data representing the MBR corresponding to one of the plurality of size orders calculated by the calculating means, and including nodes each having at least one lower-order node, each of the nodes having at least one lower-order node holding data representing an MBR embracing the respective MBR based on the data representing the MBR corresponding to one of the plurality of size orders respectively managed by all of lower-order nodes under the node itself.

With this configuration, the tree suited to the search can be generated on a size order basis. Namely, the tree, which is more proper than the tree of the representative size order, can be generated. Accordingly, the search can be done at the adequate searching cost by selecting the tree corresponding to the object size.

Preferably, the video management system according to the present invention further comprises search means determining, when a location and a size of an object are given, a size order that is larger than the object size and is a minimum size order from within the plurality of size orders, specifying one of the trees corresponding to the size order determined, and extracting, as one of video search results, information relating to a video corresponding to the MBR embracing the location of the object searched at a lowest-order node in the specified tree in a way that traces the MBR embracing the location of the object sequentially from a root node of the specified tree.

Moreover, the present invention is a video searching system comprising:

storage means holding, as pieces of data that define shooting ranges of a video being a management target, pieces of data representing minimum bounding rectangles (MBRs) each embracing a view volume showing a range to be shot in real space, wherein each MBR is calculated based on data representing a shooting position and a shooting direction of the video, and corresponds to one of a plurality of size orders; and

search means specifying, when a location and a size of an object being a search target are given, an MBR in said storage means, which is larger than a size of the object and corresponds to a minimum size order in the plurality of size orders, and extracting, as one of video search results, data relating to a video corresponding to the MBR specified when the specified MBR includes the location of the object.

Preferably, in the video searching system according to the present invention, the storage means holds a tree for hierarchically managing a plurality of videos,

the tree has a tree structure determined based on MBRs, which are calculated according to a representative size order common to a plurality of videos, each corresponding to each of the plurality of videos,

respective lowest-order nodes in the tree hold data representing the MBR corresponding to the representative size order for the plurality of videos and representing a plurality of MBRs calculated according to the plurality of size orders defined based on one of the plurality of videos,

respective nodes including at least one lower-order node in the tree hold pieces of data representing an MBR of every size order embracing the respective MBR specified by the data representing the MBRs corresponding to the representative size order and the plurality of size orders held in all of lower-order nodes under the node itself,

the search means determining, as a search MBR, when a location and a size of an object are given, an MBR corresponding to a minimum size order included in size orders prepared in the tree that is larger than the size of the object, and extracting, as one of video search results, information relating to a video corresponding to the search MBR embracing the location of the object searched at a lowest-order node in the tree in a way that traces the search MBR embracing the location of the object sequentially from a root node of the tree.

In the present application, the present invention can include the invention of a method, the invention of a program and the invention of a recording medium recorded with a program each having the same features as those of the video management system and the image search system described above.

Effects of the Invention

According to the present invention, the image of the specified object captured can be searched for at a proper cost.

Further, according to the present invention, the image of the specified object captured can be extracted without any omission.

Brief Description of the Drawings

[FIG. 1] An explanatory view of MBRs calculated based on orders of a plurality of object sizes.
[FIG. 2] An explanatory diagram showing how a tree structure based on the order of a representative object size is determined.
[FIG. 3] An explanatory diagram showing how the MBRs corresponding to the orders of the plurality of object sizes in respective nodes of the tree are calculated.
[FIG. 4] An explanatory diagram showing how an image in a way that designates the object size.
[FIG. 5] A diagram illustrating examples of video management and of a configuration of a search system in an embodiment of the present invention.
[FIG. 6] A diagram illustrating an example of a construction of an video collecting terminal shown in FIG. 5.
[FIG. 7] A diagram showing an example of a list (list 1) of metadata of video data.
[FIG. 8] An explanatory diagram showing a table (table 1) of parameters organizing the metadata in the list illustrated in FIG. 7.
[FIG. 9] An explanatory diagram showing an example of a method of calculating a view volume.
[FIG. 10]An explanatory diagram showing an example of a method of calculating an MBR of video data.
[FIG. 11] An explanatory diagram showing an example of a method of determining a distance on a far plane.
[FIG. 12] An explanatory diagram of a table (table 2) showing metadata management information.
[FIG. 13] A diagram showing an example of a data structure of a tree index.
[FIG. 14] A diagram showing an example of the tree index.
[FIG. 15] A diagram showing how the MBR in each node is calculated.
[FIG. 16] An explanatory diagram of an object size and a representative point.
[FIG. 17] A diagram illustrating an example of searching for an image of an object.
[FIG. 18] A diagram showing a display example of a search condition input screen.
[FIG. 19] A diagram showing the display example of the search condition input screen.
[FIG. 20] An explanatory diagram of the view volume and the MBR.
[FIG. 21] A diagram showing an example of hierarchization based on the MBRs.
[FIG. 22] An explanatory diagram of a problem of the prior art.

Brief Description of the Reference Numerals and Symbols

A, B, C... view volume

D1... video data,
D2... metadata,
D3... metadata for video management,
M1, M2, M3... MBR,
N1, N2-1, N2-2, N3-1 to N3-6... node,
1... video collecting terminal,
2... image search terminal,
4, 5... network,
6... Web server,
7... DB server,
8... storage,
10... PC(personal computer),
11... camera,
13... sensor,
14... communication module,
15... external memory,
61... video management server (calculating means),
62... video distribution server,
63... video search server (search means),
64... map distribution server,
71... video DB (management means),
72... object DB,
73... map DB,
81... video storage,
82... video metadata storage,
83... object information storage,
84... map information storage,
131... location measuring sensor 131,
132... azimuth measuring sensor

Best Mode for Carrying out the Invention

An embodiment of the present invention will hereinafter be described with reference to the drawings. A configuration in the following embodiment is an exemplification, and the present invention is not limited to the configuration in the embodiment.

[Outline of Embodiment]

In the embodiment, camera parameters (an angle of view etc), coordinates of a camera position (a video shooting position) and a direction of an optical axis (pan, tilt, yaw; a video shooting direction) at the time of shooting a video, are recorded as metadata in order to identify the shot video of an object or an video segment from the accumulated video data.

Further, when accumulating a video, a view volume (a shooting range) when the video is shot and an MBR (Minimum Bounding Region (or Rectangle): circumscribed quadrangle) corresponding to the view volume are calculated from the metadata. The MBR is utilized as a search index for searching for the video data.

The view volume and a size of the MBR differ depending on a size of the object that should be searched for. Hence, in the present embodiment, orders (1 meter, 10 meters, 100 meters)...(corresponding to orders of a plurality of sizes)) of a plurality of object sizes are previously defined, wherein the MBR calculated on an order-by-order basis is managed as a search index.

The search for the object involves using an MBR that is equal to or larger than a size of the search target object and is on the minimum order, and a video or a video segment of which the object coordinates are contained in the MBR is output as a result of the search.

<View Volume/MBR Management for Plural Orders>

In the embodiment of the present invention, the view volumes (shooting spaces) corresponding to the predefined orders (e.g., 1m, 10m, 100m, etc) of the plurality of object sizes are calculated by use of the metadata of the video data of the shot video. Further, the MBR (the circumscribed quadrangle) corresponding to each view volume is calculated. Each MBR is utilized when searching for the video shot by shooting the object.

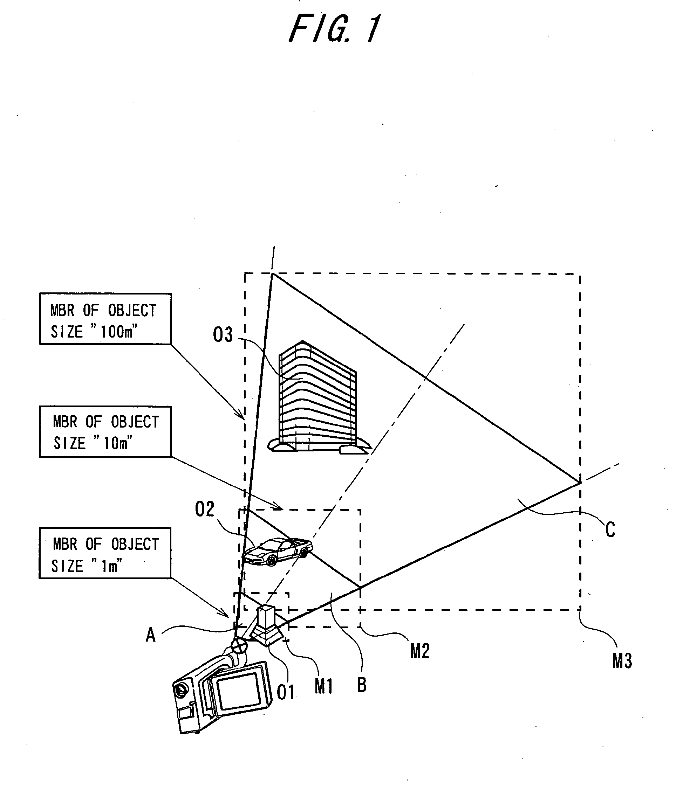

FIG. 1 is an explanatory view of the MBRs calculated based on the orders of the plurality of object sizes. FIG. 1 exemplifies view volumes A, B and C corresponding to the orders of the plurality of object sizes and MBRs M1, M2 and M3 corresponding to the view volumes A, B and C. The orders of the plurality of object sizes are prepared corresponding to the size of the object to be searched for (search target object).

The example illustrated in FIG. 1 is that the orders of the plurality of object sizes include the order "1 meter" covering an object (as exemplified by a signboard 01 in FIG. 1) that is smaller than one meter, the order "10 meters" covering an object (as exemplified by a car 02 in FIG. 1) that is several meters in size, and the order "100 meters" covering an object (as exemplified by a building 03 in FIG. 1) that is several tens meters in size.

FIG. 1 illustrates the view volumes A, B and C calculated based on the plurality of orders ("1m", "10m" and "100m"). The view volume A corresponding to the order "1m" embraces (includes) only the signboard 01. By contrast, the view volume B corresponding to the order "10m" embraces the car 02 and the signboard 01. Moreover, the view volume C corresponding to the order "100m" embraces the signboard 01, the car 02 and the building 03.

At this time, the signboard 01 having a proper size (a size preferable enough to be extracted as the search result) exists within the view volume A. The car 02 having a proper size exists within the view volume B. The building 03 having an adequate size exists within the view volume C.

Further, FIG. 1 illustrates the MBRs M1, M2 and M3 calculated based on the respective view volumes A, B and C.

In the present embodiment, as shown in FIG. 1, the view volumes and the MBRs, which correspond to the plurality of orders (the view volume A and the MBR M1, the view volume B and the MBR M2, the view volume C and the MBR M3, which correspond to the three orders in FIG. 1), are generated (calculated) as the data that define the shooting ranges of the video data. Thus, the plural pieces of data representing at multi-stages the shooting ranges are generated and managed with respect to one piece of video data. In particular, the MBRs (the MBRs M1, M2 and M3 in FIG. 1) corresponding to the respective orders are employed as search indexes for searching for the video data including the search target object.

Herein, when the video data represents a still image, the view volumes of the still image corresponding to the respective orders are calculated, and the MBRs corresponding to the respective view volumes are calculated.

In contrast with the still image, when the video data represents a moving image, the view volumes corresponding to the individual orders are calculated on a frame-by-frame basis. Then the circumscribed quadrangles embracing all of the view volumes of the respective frames are calculated as the MBRs on the order-by-order basis.

The present embodiment is characterized by respectively calculating, with respect to the video data (data D1), the view volumes and the MBRs (data D3), which correspond to the plurality of orders, from the metadata (data D2) for the video data (data D1), and managing the data D3 for searching for the video data (data D1).

<Determination of Tree Structure and Calculation of MBR>

On the occasion of managing the data D3 (the view volumes and the MBRs: the metadata for searching for the videos), the following configuration can be adopted. Namely, an order (representative order) of a representative object size is specified for the video data, and a tree index of the video data is generated by use of the MBRs calculated with respect to this representative order. The representative order is one order selectable from the plurality of orders defined with respect to the video data.

The generation of the tree index can be implemented in two steps that involve (1) determining the tree structure and (2) calculating MBR values for respective nodes organizing the tree.

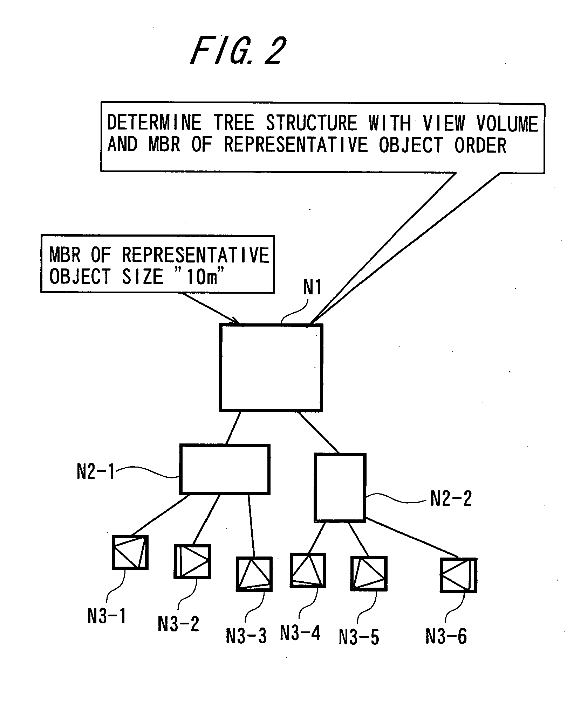

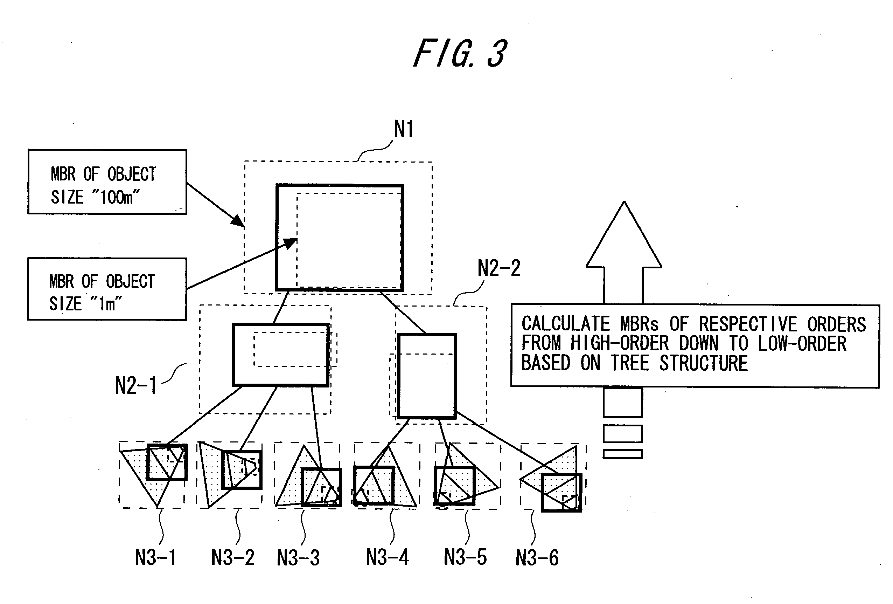

FIG. 2 is an explanatory diagram illustrating how the tree structure based on the order of the representative object size is determined (step (1)). FIG. 3 is an explanatory diagram illustrating how the MBR values for the orders of the plurality of object sizes are calculated (step (2)).

On the premise of determining the tree structure illustrated in FIG. 2, in regard to respective pieces of video (image) data (FIG. 2 exemplifies six pieces of video data (the unit of record)) of the search target object, the view volume and the MBR value for the representative order are calculated.

The example illustrated in FIG. 2 is that "10m" is defined as the representative order, and the view volume and the MBR of each piece of video data corresponding to the representative order "10m" are calculated.

The determination of the tree structure is made based on an overlap, a distance, etc. of the MBR of the representative order. At this time, the MBRs are allocated so that the MBRs in the vicinity of the representative order become children of the same node. The example illustrated in FIG. 2 shows a 3-hierarchy tree structure generated for six pieces of video data.

In this tree structure, based on the view volume and the MBR of the representative order for the six pieces of video data, a node N1 is formed at the uppermost layer (root), nodes N2-1 and N2-2 belonging to the second layer are formed under the node N1, and nodes N3-1 through N3-6 are formed at the third layer (the lowermost layer) under the nodes N2-1 and N2-2.

This tree structure takes account of the distances and the overlap between the respective pieces of video data (MBRs) and is generated so that any bias does not occur in the number of the child nodes belonging to one node.

As a result, in this tree structure, the two intermediate nodes N2-1 and N2-2 each including the three child nodes are generated, and the root node N1 including the two intermediate nodes N2-1 and N2-2 is generated. Thus, the tree structure as the tree index of the video data is generated based on the MBR of the representative order.

After determining the tree structure, the MBR values of the nodes of the respective orders are calculated. To be specific, as illustrated in FIG. 3, the view volumes and the MBRs, which correspond to the plurality of pre-defined orders (excluding the representative order), are calculated respectively for the lowest-order nodes (N3-1 through N3-6).

For instance, if the plural orders are "1m", "10m" and "100m" and if the representative order is "10m", the view volumes and the MBR values for the remaining orders "1m" and "100m" are calculated. The thus-calculated view volumes and MBR values, which correspond to the plurality of orders, can be stored in the respective lowest-order nodes (N3-1 through N3-6).

Next, in the nodes (which are the nodes N1, N2-1 and N2-2) including the child nodes, a value of the MBR embracing the MBRs of the respective orders, which are stored in all of the nodes existing under these nodes, is calculated on the order-by-order basis and is then stored in the nodes.

For example, when putting a focus on the node N2-1, the node N2-1 includes the nodes N3-1 through N3-3 as the lower-order nodes. The respective nodes N3-1 through N3-3 have the MBR values corresponding to the orders "1m", "10m" and "100m".

Calculated then, with respect to the node N2-1, are a value of the MBR embracing all of the MBRs of the order "1m" which are possessed by the nodes N3-1 through N3-3, a value of the MBR embracing all of the MBRs of the order "10m" which are possessed by the nodes N3-1 through N3-3, and a value of the MBR embracing all of the MBRs of the order "100m" which are possessed by the nodes N3-1 through N3-3. The thus-calculated three MBR values are stored in the node N2-1.

The process of thus calculating the MBR values is executed for all of the higher-order nodes (N2-2, N1). As a result, the highest-order node (the root node: the node N1) comes to a status of having the MBR values on the order-by-order basis, which include the view volumes of all the video data embraced by the tree.

In the present embodiment, the tree structure is determined by the MBR of the representative order, as for each of the nodes having the child nodes, a value of the MBR including the MBRs possessed by all of the child nodes included by the (parent) node is calculated on the order-by-order basis, and the calculated MBR value on the order-by-order basis is stored in each node. The MBR value held by each node is utilized as the index for searching for the video (object).

<Search for Video>

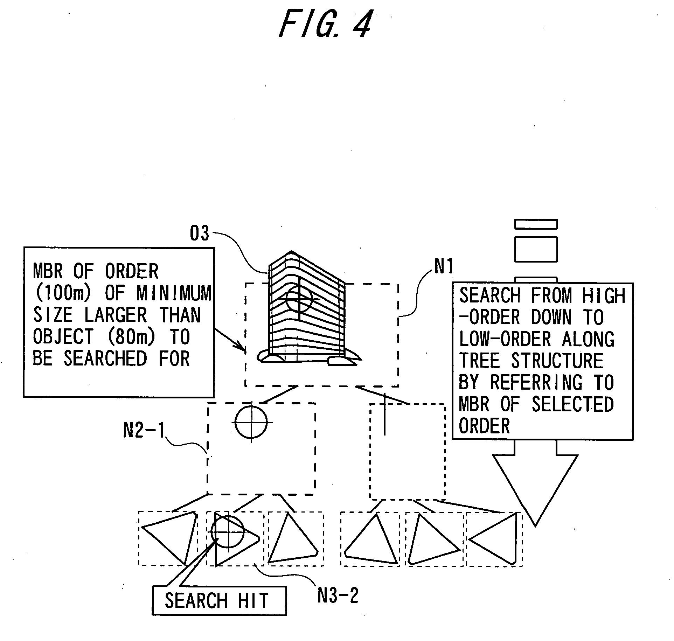

FIG. 4 is an explanatory view illustrating how a video with an object size designated is searched for. The search for the video involves designating a location and a size of the object to be searched. At this time, the MBR of the minimum order larger than the designated object size is selected (determined).

Thereafter, the root node in the tree index and the node with the object location embraced by the MBR of the selected order are searched for based on the designated object location. Eventually, the MBR of the view volume embracing the object to be searched is detected. The video data corresponding to the detected MBR is contained in the search result.

In the example shown in FIG. 4, the building 03 having an object size of 80 meters is designated as the object to be searched. In this case, the order "100m", which is larger than the object size and is defined as the minimum order, is determined as the search order.

Then, the MBR including the object location (the location of the building) is searched for sequentially from the root node. In this example, the MBR corresponding to the search order is searched for in the sequence such as the node N1 -> the node N2-1 - > the node N3-2. Finally, the MBR corresponding to the order "100m" of the node N3-2 is hit. Accordingly, the video data corresponding to the thus-hit MBR is contained as one item of the search result.

Note that it is also feasible to make the view volume embracing determination in greater detail (it is determined whether the view volume of the video data embraces the object or not) about the video data obtained as the search result. This type of precise object embracing determination may also be made.

In the case of adopting the configuration described with reference to FIGS. 1 - 4, the following advantages are yielded.

<1> The order corresponding to the size of the search target (object) can be determined from the plurality of orders. With this contrivance, it is possible to exclude from the search range (the MBR of) the order that does not include the search target object or considered, even if including the search target object, to be low in terms of a utility value.

<2> The order larger than the search target object is determined as the search order. Even the plurality of MBRs corresponding to the plurality of orders prepared for the video data includes the MBR that does not embrace the object coincident with an object of the search target, the order larger than the size of the search target is determined, whereby a failure to search throughout can be prevented.

For instance, in the example illustrated in FIG. 4, even when the building 03 is not embraced by the MBR of the order "1m", it is determined whether or not the building 03 is embraced by the MBR of the order "100m" defined as the higher order than the order "1m". Hence, none of the search target is excluded from the search range.

<3> Further, the minimum order larger than the size of the search target object is determined as the search order. This contrivance enables the video to be searched for based on such an order that the search target object is, it is considered, shot in a proper size (with a high utility value). Expansion of the search range can be thereby restrained, and the search result can be also thereby normalized.

<4> Moreover, the preparation of the plurality of orders enables the embracing check from being done with the infinitely-expanded MBR at the searching time.

<5> Furthermore, according to the tree structure generating method described above, in the case of modifying the tree index in accordance with the addition/deletion of the video data, a structuring process (a tree structure modifying process) based on the addition/deletion may be carried out with respect to only the representative order.

Accordingly, the cost for generating the tree structure can be restrained to the same degree as by the conventional method. Therefore, the video searching system flexible enough to handle the multi-type/multi-size objects can be configured.

It is to be noted that the representative order is not necessarily set to the fixed order, and a representative order getting different depending on the video data (tree) may also be adopted. For instance, a video shooter (who shoots the object) may explicitly input the order of the representative object size of the video, and this order may be recorded and employed as the metadata.

Alternatively, an object distance is obtained by a sensor and by video processing, and the order of the object size, which becomes the minimum view volume embracing the object, may be adopted as the representative order.

In any case, it follows that the order getting different depending on a shooting target differing according to the video data is adopted as the representative order. The order recognized to have a high search frequency is adopted as the representative order, whereby the tree index facilitating the hit of the object video can be configured.

The outline given above has discussed the case of organizing video data set consisting of plural pieces of video data into the tree structure. In place of this scheme, the same method can be applied to a scheme that the video file is divided into frames and further subdivided into video subsets such as shots each defined as a plurality of frame sets, wherein the view volume and the MBR are calculated on an video-subset basis.

The features and the implementation of the present invention will be described in greater detail by way of the following embodiment.

[Embodiment]

An embodiment of the present invention will be described based on a Web-based video accumulation search system. The system described herein is that a large quantity of videos attached with metadata, which are collected by a multiplicity of video collecting terminals, are accumulated in a server, and a backend video search terminal and a video search server cooperate to search for and display a video including a designated object.

A mobile phone with a built-in camera, a mobile personal computer with a camera, a PDA (Personal Digital Assistant) with a camera and a digital camera/digital video camera with a communication function may be assumed as the video collecting terminals.

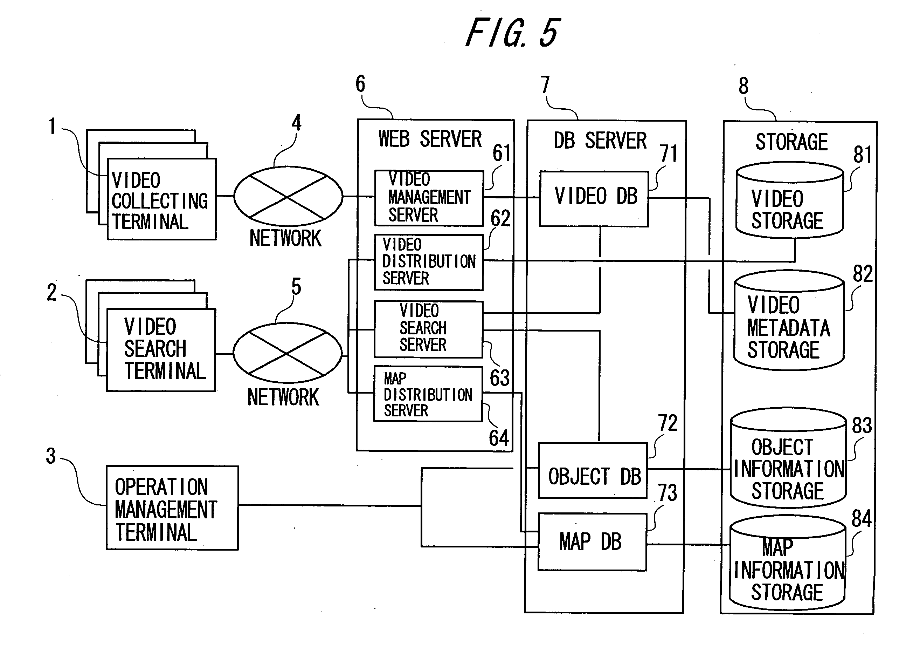

FIG. 5 is a diagram showing an example of a configuration of the video search system in the embodiment. In FIG. 5, the system is configured by a video collecting terminal 1, a video search terminal 2, an operation management terminal 3, a network 4, a network 5, a Web server 6, a DB (database) server 7 and a storage (storage means) 8.

Each of the Web server 6, the DB server 7 and the storage 8 can be constructed by use of an information processing device (computer) including a processor such as a CPU, a storage device (such as memories (ROM, RAM) and a hard disc), an input/output (I/O) interface, a communication interface, etc.

The computer constructing the Web server 6 functions, when the processor executes programs stored in the storage device, as a device that actualizes a video management server 61, a video distribution server 62, a video search server 63 and a map distribution server 64.

Further, the computer constructing the DB server 7 functions, when the processor executes a program stored in the storage device, as a device that has a video DB 71, an object DB 72 and a map DB 73.

Moreover, the computer constructing the storage 8 functions, when the processor executes a program stored in the storage device, as a device that has a video storage 81, a video metadata storage 82, an object information storage 83 and a map information storage 84 on the storage device. The storage 8 may be provided as a storage included in the computer constructing the DB server 7 or a storage that the computer constructing the DB server 7 is available.

The operation and the implementation of each of component units will be explained.

<Video Collecting Terminal>

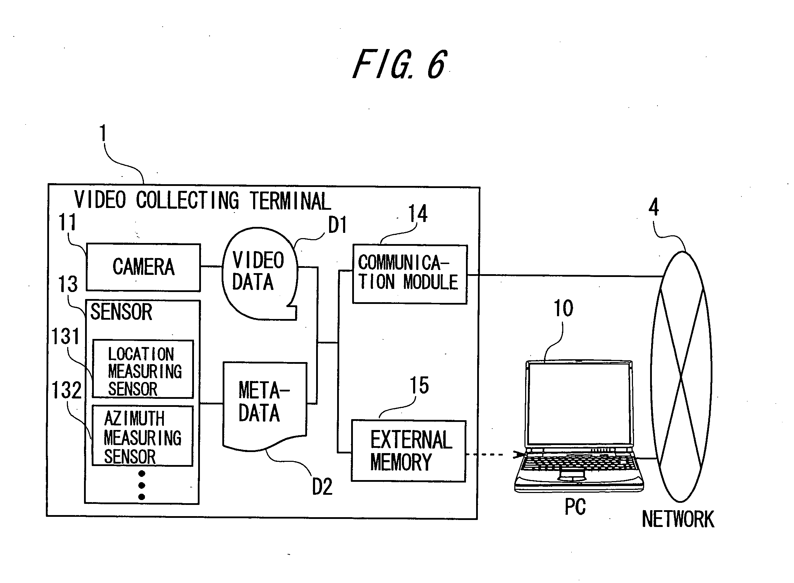

FIG. 6 is a diagram illustrating an example of a configuration of the video collecting terminal 1 shown in FIG. 5. In FIG. 6, the video collecting terminal 1 shoots a still image or a moving image with a camera 11 and converts these images into video-data D1.

Further, the video collecting terminal 1 records, as metadata D2, sensor information given from a sensor 13 upon shooting a video. Further, the video collecting terminal 1 transmits the video data D1 and the metadata D2 to the Web server 6 via the network 4 by use of a communication module 14.

The sensor 13 includes at least a location measuring sensor 131 and an azimuth measuring sensor 132. For instance, a GPS (Global Positioning System) is applied to the position measuring sensor 131. For example, an electronic compass is applied to the azimuth measuring sensor 132. The position measuring sensor 131 and the azimuth measuring sensor 132 may involve implementing other means and sensors.

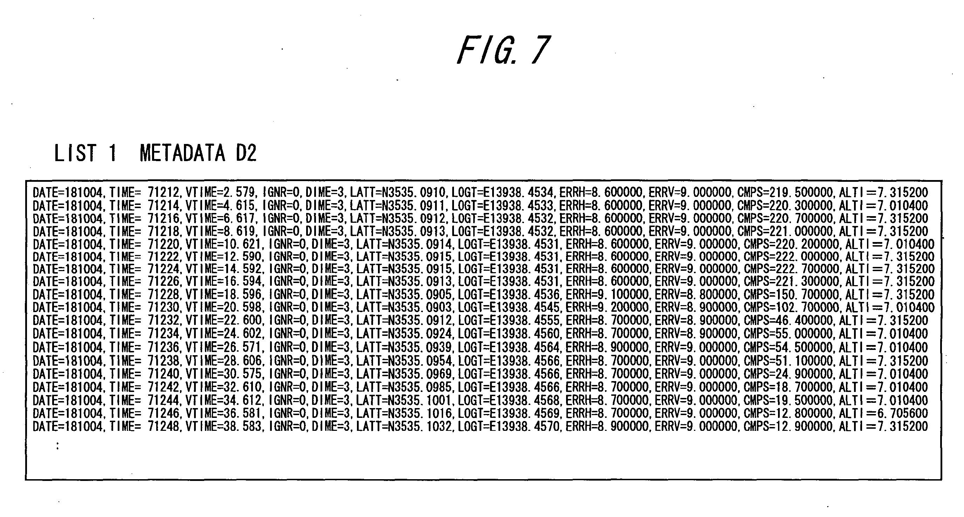

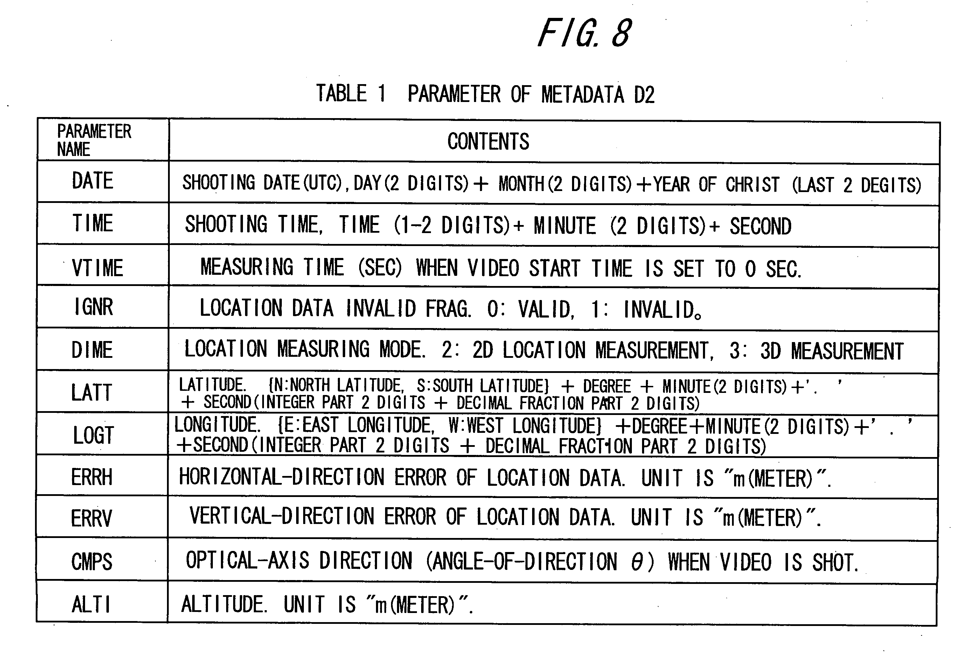

FIG. 7 shows a list (list 1) as one example of metadata D2 obtained by the position measuring sensor 131 and the azimuth measuring sensor 132. FIG. 8 is a diagram illustrating a table (table 1) that shows descriptions of the respective parameters shown in the list 1.

Entries in the respective lines (rows) of the list of the metadata D2 shown in FIG. 7 are contents of the parameters (FIG. 8) of the video data (e.g., moving images, frames) generated (shot) on a predetermined unit of record (e.g., per two seconds). Namely, the video data D1 is generated according to the unit of record, and the metadata D2 of each piece of video data is generated.

Note that the sensor 13 can further include a view angle sensor 133 that detects zooming of a camera 11 and records a view angle when shooting the object, and an object distance measuring sensor 134 that measures a distance from an shooting position of the camera 11 to the object. In this case, an available scheme is that measured results of the view angle sensor 133 and the object distance measuring sensor 134 are recorded in the metadata D2.

A realtime transmission as by streaming can be applied to the transmission to the Web server 6. Alternatively, an applicable method is that the video data D1 and the metadata D2 accumulated in the video collecting terminal 1 are transmitted in a way that attaches these items of data to an e-mail. Another applicable scheme is that the metadata D2 is transmitted via a communication route different from a communication route for the video data D1.

The video data D1 and the metadata D2 can be, as shown in FIG. 6, generated as individual items of data. By contrast, a format in which the metadata D2 is contained in a video data format can be applied as in the case of an EXIF (Exchangeable Image File format for Digital Still Camera) file for the still image.

Still another applicable scheme is that the metadata D2 is integrated with the video data D1 in a mode of writing the metadata D2 on a sound track, a video track or a metadata-dedicated track.

Further, as a substitute for transmitting the video data D1 and the metadata D2 trough the communication module 14, the following scheme can be also applied. For example, as illustrated in FIG. 6, the video data D1 and the metadata D2 are stored in an external memory 15 such as an SD (Secure Digital) card and a memory stick. Thereafter, the external memory 15 is connected offline to a PC (Personal computer) 10, wherein the video data D1 and the metadata D2 are transmitted to the Web server 6 via the network 4 to which the PC 10 is connected.

<Video Management Server>

Referring back to FIG. 6, the video management server 61 constitutes a part of the Web server 6. The video management server 61 stores the video data D1 in the video storage 81 by establishing a cooperative linkup with the video DB 71 configuring the DB server 7.

Further, the video management server 61 calculates the metadata about a video shooting range of the video data on the basis of the metadata D2 (which corresponds to calculating means), and stores the metadata D2 and the calculated metadata about the video shooting range in the video metadata storage 82 by establishing the cooperative linkup with the video DB 71 (which corresponds to management means).

To be more specific, the video management server 61, when receiving the video data D1 and the metadata D2 from the video collecting terminal 1, stores the video data D1 in the video storage 81 through the video DB 71. Further, the video management server 61 calculates the view volume of the video on a measuring-time basis (per unit of record) from the metadata D2, and obtains the MBR defined as the circumscribed quadrangle thereof.

<<Calculation of View Volume and MBR>>

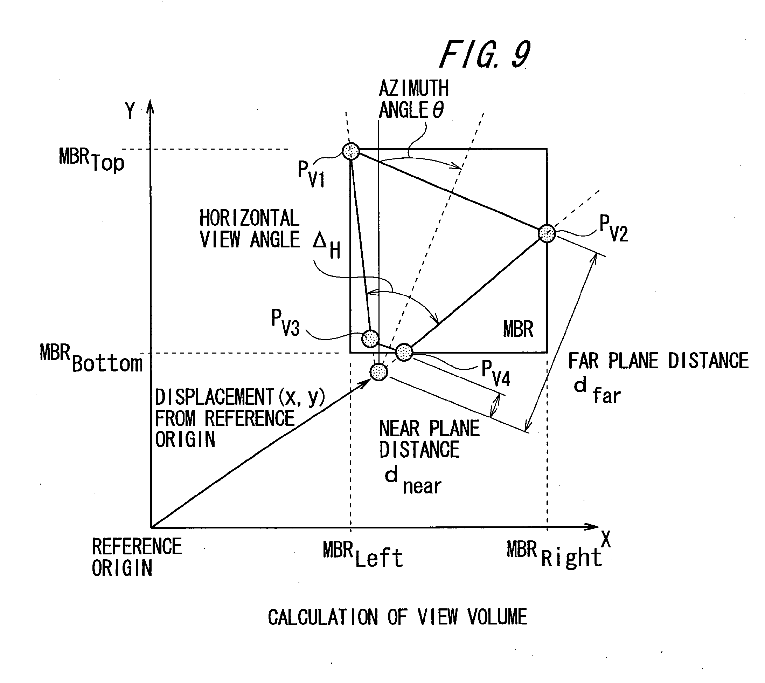

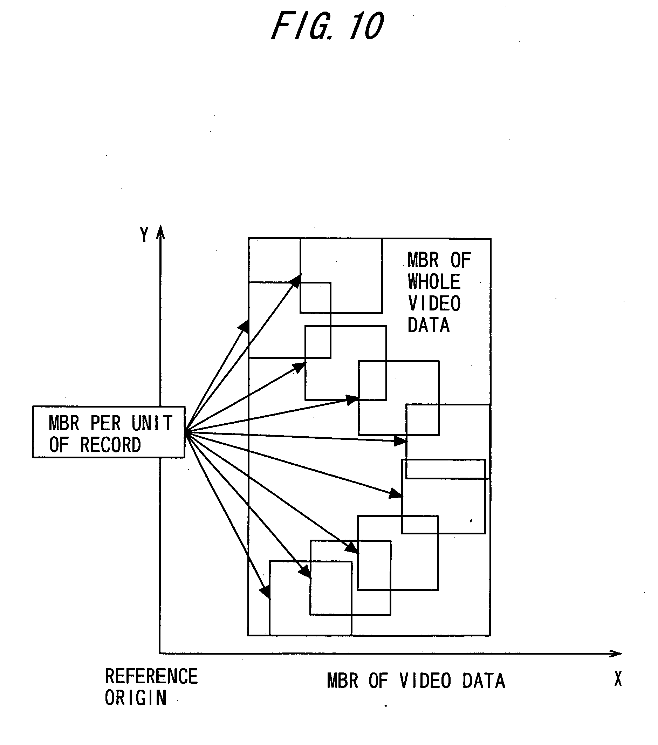

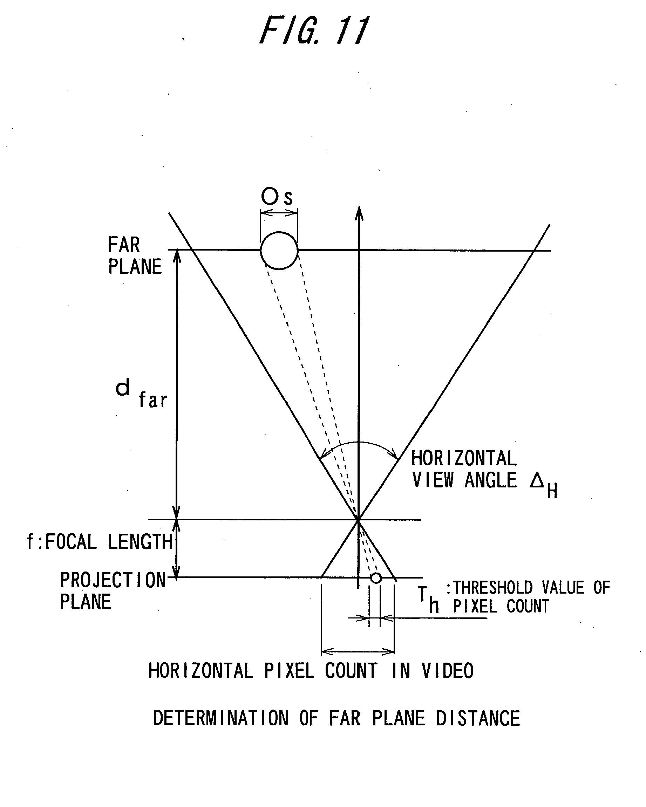

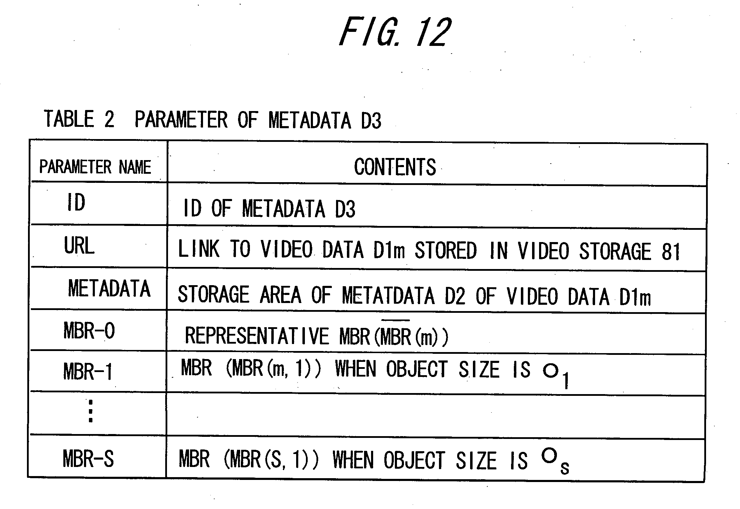

A method, by which the video management server 61 calculates the view volume and the MBR, will be described. FIG. 9 is an explanatory diagram of an example of how the view volume is calculated. FIG. 10 is an explanatory diagram of the MBR of the video data. FIG. 11 is an explanatory diagram showing an example of a method of determining a far plane distance. FIG. 12 is a diagram showing parameters of metadata D3 generated based on the metadata D2.

(A) Case of Fixed Object Size

Given at first is an explanation of how the view volume and the MBR are calculated in the case of a fixed object size. For simplifying the calculation, the view volume is calculated based not on a latitude/longitude coordinate system but on the Euclidean coordinate system so as to get approximate to the plane (FIG. 9).

A reference origin of the coordinate system is, if in the vicinity of Tokyo, set at the north latitude 36° 0' 0" and the east longitude 139° 59' 0" (given based on the latitude and the longitude of the origin of the IX system according to the notification by Ministry of Land, Infrastructure and Transport). If the shooting range is in a specified location and if the reference origin is locally set indoor, an arbitrary origin can be adopted.

A displacement quantity of the video shooting position from the reference origin is defined by symbols "$(x, y)$ (these unit are [m])", an optical-axis direction is defined by a symbol "$\theta$" (the unit is [rad]), a horizontal view angle of the camera that shoots the video is defined by a symbol "$\Delta_H$ (the unit is [rad])", a near plane distance that the video can be shot is defined by a symbol "$d_{near}$ (the unit is [m])", and a far plane distance that the video can be shot is defined by a symbol "$d_{far}$ (the unit is [m])".

In this case, the view volume can be obtained as a protruded shape (substantially trapezoidal shape) defined by four vertexes $Pv_1$, $Pv_2$, $Pv_3$, and $Pv_4$ calculated by the following formulae 1.1 through 1.4.

The formula 1.1 is a formula for calculating the vertex $Pv_1$ of the view volume, the formula 1.2 is a formula for calculating the vertex $Pv_2$ of the view volume, the formula 1.3 is a formula for calculating the vertex $Pv_3$ of the view volume, and the formula 1.4 is a formula for calculating the vertex $Pv_4$ of the view volume.

On the other hand, the MBR can be defined by a maximum value ($MBR_{Right}$) and a minimum value ($MBR_{Left}$) of an X-value, and a minimum value ($MBR_{Bottom}$) and a maximum value ($MBR_{Top}$) of a Y-value of the four points forming the view volume (the formula 2). The formula 2 is a formula for calculating the MBR of the single view volume.

[Mathematical Expression 1]

$$Pv_1 = \begin{bmatrix} Pv_1.x \\ Pv_1.y \end{bmatrix} = \begin{bmatrix} x + d_{far}\left(\sin\theta - \cos\theta \tan\dfrac{\Delta_H}{2}\right) \\ y + d_{far}\left(\cos\theta + \sin\theta \tan\dfrac{\Delta_H}{2}\right) \end{bmatrix} \quad \text{... Formula 1.1}$$

[Mathematical Expression 2]

$$Pv_2 = \begin{bmatrix} Pv_2.x \\ Pv_2.y \end{bmatrix} = \begin{bmatrix} x + d_{far}\left(\sin\theta + \cos\theta \tan\dfrac{\Delta_H}{2}\right) \\ y + d_{far}\left(\cos\theta - \sin\theta \tan\dfrac{\Delta_H}{2}\right) \end{bmatrix} \quad \text{... Formula 1.2}$$

**[Mathematical Expression 3]**

$$Pv_3 = \begin{bmatrix} Pv_3.x \\ Pv_3.y \end{bmatrix} = \begin{bmatrix} x + d_{far}\left( \sin\theta - \cos\theta \tan\dfrac{\Delta_H}{2} \right) \\ y + d_{far}\left( \cos\theta + \sin\theta \tan\dfrac{\Delta_H}{2} \right) \end{bmatrix} \quad \text{... Formula 1.3}$$

**[Mathematical Expression 4]**

$$Pv_4 = \begin{bmatrix} Pv_4.x \\ Pv_4.y \end{bmatrix} = \begin{bmatrix} x + d_{far}\left( \sin\theta + \cos\theta \tan\dfrac{\Delta_H}{2} \right) \\ y + d_{far}\left( \cos\theta - \sin\theta \tan\dfrac{\Delta_H}{2} \right) \end{bmatrix} \quad \text{... Formula 1.4}$$

**[Mathematical Expression 5]**

$$MBR = \begin{bmatrix} MBR_{Left} \\ MBR_{Bottom} \\ MBR_{Right} \\ MBR_{Top} \end{bmatrix} = \begin{bmatrix} \min_{i=1-4}(Pv_i.x) \\ \min_{i=1-4}(Pv_i.y) \\ \min_{i=1-4}(Pv_i.x) \\ \min_{i=1-4}(Pv_i.y) \end{bmatrix} \quad \text{... Formula 2}$$

The MBR per unit of record (which corresponds one line (row) in the list 1) of the metadata D2 can be calculated by use of the formulae 1.1 through 1.4 and the formula 2. The MBR of the whole video data can be calculated as the circumscribed quadrangle (MBR) embracing all of the individual MBRs calculated per unit of record (see FIG. 10).

In an example illustrated in FIG. 10, the MBR specified as of the whole video data is the MBR, wherein the respective sides (of the circumscribed quadrangle) are given by the maximum value and the minimum value of the X-value and the maximum value and the minimum value of the Y-value of the MBRs of plural pieces of video data.

(B) Calculation of MBR in the Case of Designating Object Size

Next, an explanation of how the MBR is calculated in the case of designating the object size will be made.

When M-pieces of video data are defined by D1m (m = 1, 2,..., M) and when S-pieces of object sizes are defined by $O_s$ (s = 1, 2, ..., S), the MBRs of D1 and $O_s$ are described as MBR(m, S). At this time, the MBR(m, S) can be calculated by the same method as in the case of the fixed object size, wherein only the far plane distance $d_{far}$ is different.

The far plane distance $d_{far}$ is, as shown in FIG. 11, defined by a pixel count $T_h$ serving as a recognition limit in the object image having the object size $O_s$ and by a focal length f (formula 3). The formula 3 is a formula for calculating the far plane distance $d_{far}$.

[Mathematical Expression 6]

$$d_{far} = \frac{fO_s}{T_h} \quad \text{... Formula 3}$$

The focal length f depends on an optical system in the camera shooting the video. When the horizontal view angle $\Delta_H$ is recorded as the metadata, the far plane distance $d_{far}$ corresponding to zooming and macro shooting can be calculated by calculating the focal length f rather than the horizontal view angle $\Delta_H$ at any time. Thus, in the present embodiment, it is feasible to specify the far plane distance taking account of the object shot in a size equal to or larger than a fixed pixel count (e.g., one or more pixels) or equal to or larger than a fixed pixel size by specifying the pixel count $T_h$. Further, the far plane distance, at which to image the object with the pixel count or pixel size equal to or larger than the fixed pixel count or pixel size and at a view angle equal to or larger than the fixed view angle, can be specified.

A plurality of object sizes (orders) possible of being treated by the video accumulation search system are set as the object size $O_s$. At this time, it is preferable to comprehensively set the plurality of object sizes.

The representative object size about the video data D1m is determined, and the MBR thereof (which is the MBR for the representative object order (size)) is defined as by the following formula 7.

[Mathematical Expression 7]

$$\overline{MBR(m)} \quad \text{...(the MBR for the representative object order)}$$

<<Determination of Representative Object Size>>

The representative object size per unit of recording the metadata can be determined by use of the following method (a) or (b).

(a) The object size is explicitly described in the metadata when shooting the object.
(b) A distance from the video shooting position to the object is measured by a distance measuring sensor such as a laser rangefinder, and the object size on a farther plane than this distance is adopted.

The representative object size of the video data can be determined by employing, e.g., the object size that has been adopted most frequently on the record units throughout.

Through the processes described above, the video management server 61 generates the MBR (MBR(m, s)) on the object order basis and the MBR (the formula 7) for the representative object size.

The video management server 61 generates the metadata D3 for video managing (a table 2: see FIG. 12), containing a URL (Uniform Resource Locator) or an ID (Identification) for specifying the video data D1m stored in the video storage 81, and stores the metadata D3 in the video DB 71.

The processor provided in the computer realizing the video management server 61 executes a program stored in the memory, thereby actualizing the process by the video management server 61.

The data (e.g., data of the calculation formula) used for implementing the view volume and the MBR and the data used for determining the representative order are previously stored in the computer realizing the video management server 61, and the calculation of the MBR and the determination of the representative order are carried out in a way that utilizes the items of information contained in the metadata D2 as the parameters.

<Video DB 71>

The video DB 71 of the DB server 7 registers the metadata D3 in the video metadata storage 82. Further, the video DB 71 (which corresponds to management means) generates the search index of the metadata D3 by use of the MBR in order to search fast for the metadata D3 in the video metadata storage 82.

<<Method of Generating Search Index>>

The search index is employed for extracting fast the metadata D3 containing the MBR that includes specified location coordinates (object location coordinates). It is therefore appropriate that the search index has the tree structure.

Properties required of the tree structure are a property [1] that the MBRs exhibiting a high degree of overlap are distributed to the child nodes of the same (parent) node to the greatest possible degree, a property [2] that the child nodes are not concentrated on the specified node, and a property [3] that the tree is a balanced tree having a uniform depth of a leaf node.

The "R-trees" and the "R*-trees" being an improved version of the "R-trees" are given as algorithms for determining the tree structure that satisfies the conditions [1] - [3]. The tree structure can be generated by implementing these algorithms (the respective algorithms are not mentioned herein).

Note that the "R-trees" and the "R*-trees" are disclosed in the following document.

[Guttman, A. "R-Trees: A Dynamic Index Structure for Spatial Searching." Proc of the 1984 ACM SIGMOD Int'1 conf on Mgmt f Data, 45-57.]

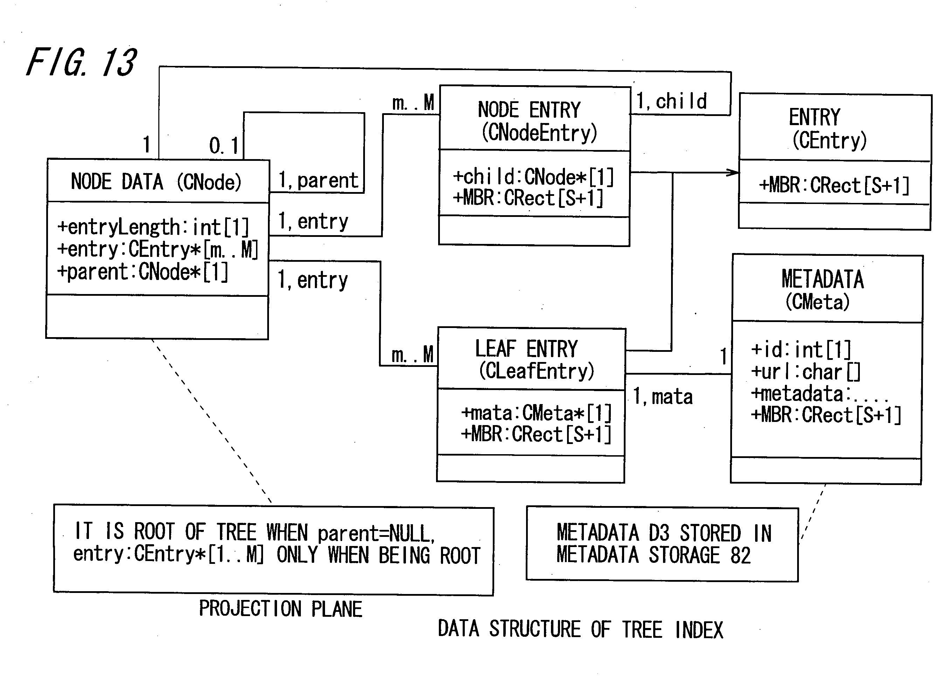

FIG. 13 illustrates a data structure of the tree index to be generated. The tree index data is organized by a node data class (CNode) for storing the nodes (including the root node) of the tree, a node entry class (CNodeEntry) for storing pointers to the child nodes, and a leaf entry class (CLeafEntry) for storing pointers to pieces of metadata (CMeta). Each node has M-pieces of child nodes at the maximum and m-pieces of child nodes at the minimum. Exceptionally, however, only the root node can have the single child node at the minimum.

Each of CNodeEntry, CLeafEntry and CMeta is capable of the MBRs on the object order basis in an (S+1) array. The first element in the array elements is stored with the MBR of the representative order.

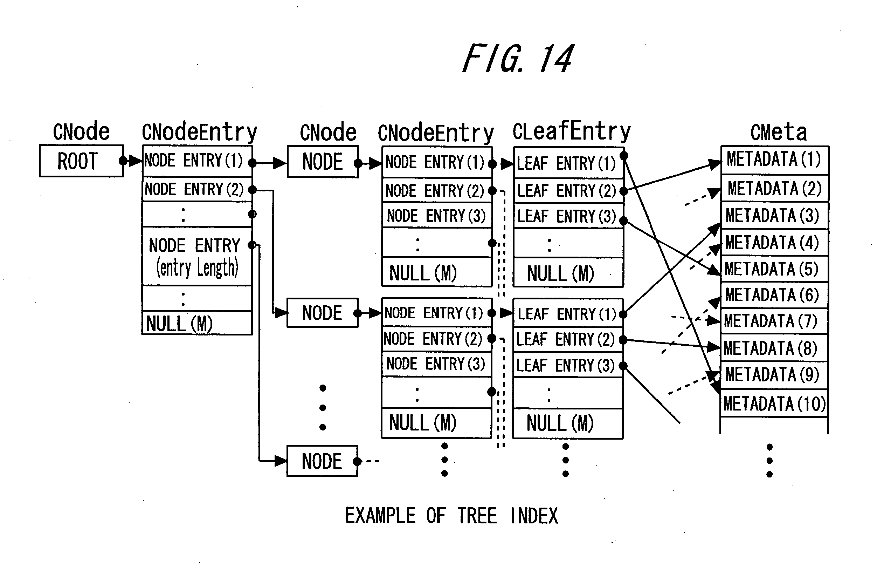

FIG. 14 is a diagram showing an example of the tree index generated by applying the algorithm such as the R-trees to the MBR of the representative order. In the case of utilizing the R-trees, only the first array element (the MBR of the representative order) of the MBRs will have already been calculated when generating the tree index.

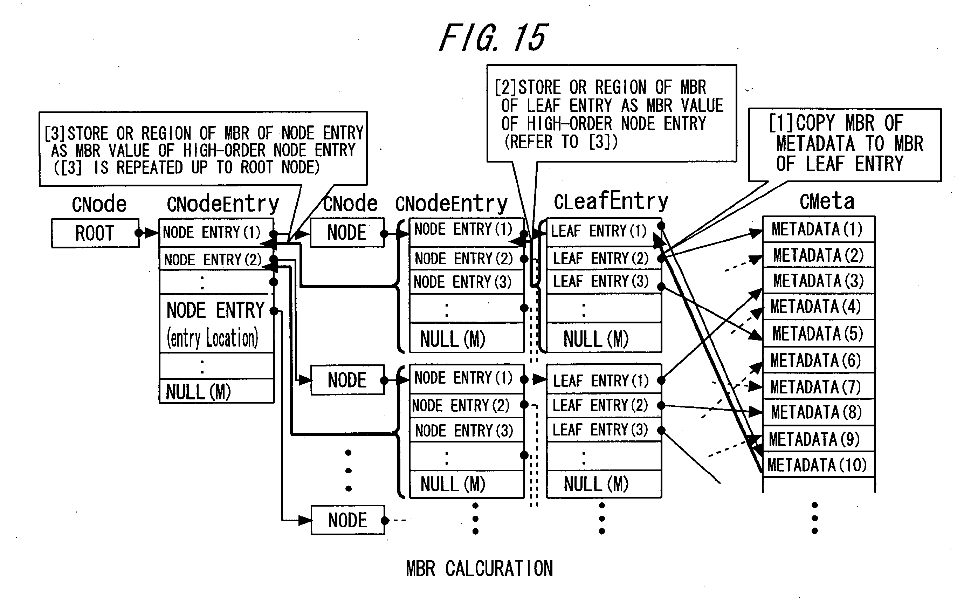

In the present embodiment, after determining the tree structure, values of other array elements of the MBRs are calculated and stored. The calculation of the MBR is made through value-propagation of the MBRs from the terminal of the tree index toward the root (see FIG. 15).

To be specific, the MBR of the metadata is copied to the MBR in the leaf entry (FIG. 15: [1]). Next, an OR region (MBR value (data representing the MBR) containing the lower-order MBRs)) of the MBR in the leaf entry is stored as the MBR value in the higher-order node entry (FIG. 15: [2]). Further, the OR region (the MBR value containing the lower-order MBRs) of the MBR in the node entry is stored as the MBR value of the higher-order node entry (FIG. 15: [3]). The process of [3] is repeatedly executed up to the root node.

Through the processes described above, it follows that the MBR values of the respective orders, which include all of the MBRs of the orders of all of the lower-order nodes under the higher-order node, are stored as the search index.

The processes described above enable the tree index for searching for the metadata to be generated. When the video data is added or deleted, the tree structure is changed according to the representative order as the necessity may arise. Then, in the same way as when generating the tree index, the MBR values are calculated through the value-propagation of the MBRs.

Video management using one index tree based on the MBR of the representative order is effective in decreasing a cost for the adding/deleting process of the video data to and from the video DB 71. Such a possibility, however, exists that the MBRs other than the representative order do not take the tree structure for the optimum search.

Therefore, in the case of emphasizing the efficiency at the searching time to a greater degree than a DB maintenance cost, an available scheme is that S-pieces of index trees prepared for every S-pieces of orders are generated, one index tree is selectively used corresponding to the designated order.

The process based on the video DB 71 is actualized by executing a program stored in the memory with the processor provided in the computer that realizes the video management server 61. The generated index tree for the search may be held in, e.g., the video DB 71 and may also be stored in the video metadata storage 82 together with the metadata D3.

<Object Video Search>

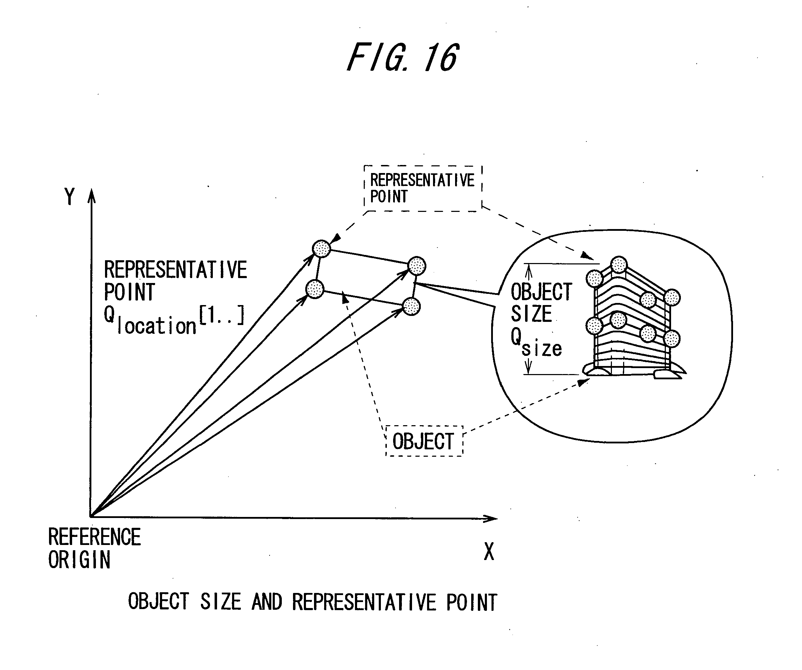

Next, an object video searching scheme using the tree index will be described. A query (search condition) about searching for the video requires an object size and a location of representative point (coordinate value). FIG. 16 is an explanatory diagram of the object size and the representative point.

The object size is a numerical value as a rough estimate representing a size of the search target object. The object size is defined as a scale determined corresponding to the object. For instance, if the object is a high-rise building, a height of the building is determined as the object size. If the object is a car, a total length of the car is determined as the object size.

The representative point of the object is, if this representative point is so captured as to be in the video, a point from which it can be determined that the object will have been shot. One or more arbitrary points can be determined as the representative point(s). Alternatively, it is possible to prepare the representative points of which the number is large enough to comprehensively express the object.

The representative point can be manually generated based on a shape of the object. Alternatively, an applicable scheme is that the representative point is automatically generated by a method of dividing the shape of the object in mesh.

If the object size to be designated when searching for the object is specified by $Q_{size}$, the minimum object size order $O_s$, which meets $Q_{size} = O_s$, is determined. The MBR calculated using the object size order $O_s$ is employed for searching for the video.

The search is conducted in a way that traces the index tree from the root down to the leaves. A goal of tracing (searching) lies in extracting all of the metadata in which an MBR[s] attribute (the MBR of $O_s$) embraces the representative point location $Q_{location}$. If a plurality of representative point locations $Q_{location}$ exists, however, the extraction of all of the metadata embracing a part or all of the plurality of representative point locations $Q_{location}$, can be set in the goal. Alternatively, the extraction of all of the metadata embracing a fixed or greater number of representative point locations in the plurality of representative point locations $Q_{location}$, can be also set in the goal.

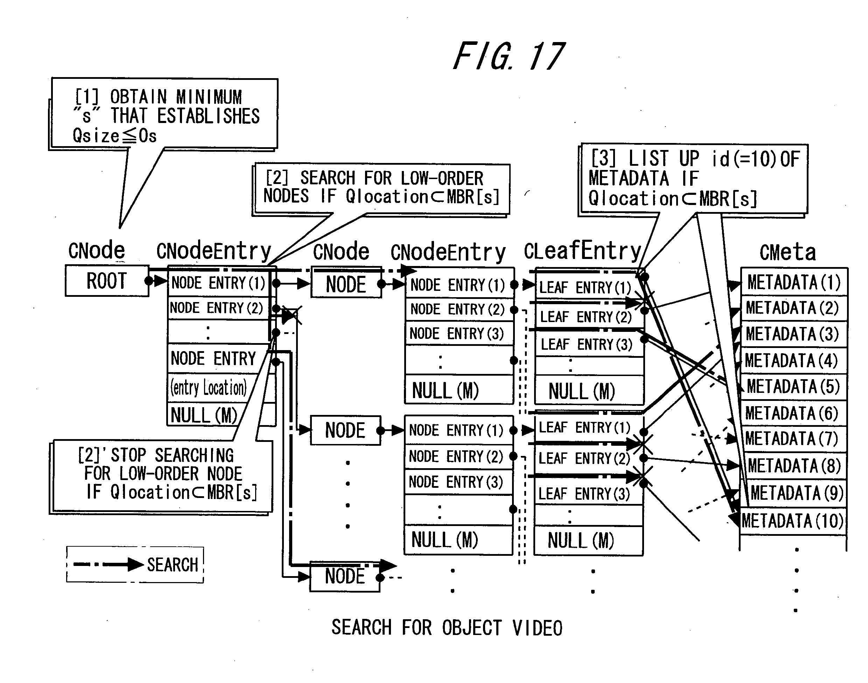

The search for the metadata is performed by a vertical type search as shown in FIG. 17. When the search proceeds to the lower-order nodes from the higher-order node (or from the root), the MBR[s] attribute in the entry (CNodeEntry) is referred to, and, only when a relation "$Q_{location} \subset MBR[s]$" is established, the lower-order nodes become the search target nodes. This scheme enables a futile search to be omitted. If the relation "$Q_{location} \subset MBR[s]$" is established with respect to the MBR[s] attribute of the leaf entry when the search advances to the leaf entry (CLeafEntry), "id" of the metadata (CMeta) specified by the meta attribute is recorded (extracted) as a search result.

The object search function explained above is implemented in the video search server 63 (FIG. 5). The process by the video search server 63 is actualized by executing a program stored in the memory with the processor provided in the computer realizing the video search server 63.

The video search server 63 requests the video DB 71 to perform the search and receives a result (the hit metadata D3) of the search process by the video DB 71. Alternatively, the video search server 63 may refer directly to the search index tree, thus acquiring a corresponding piece of metadata D3 from the video metadata storage 82.

<Method of Actualizing Video Search Service>

Given next is an explanation of a method of actualizing the video search service provided by establishing a cooperative linkup between the video search terminal 2 and the video search server 63 illustrated in FIG. 5.

The video search terminal 2 is realized by the PC and the Web Browser. Alternatively, the video search terminal 2 can be also realized by a dedicated software component or a dedicated terminal.

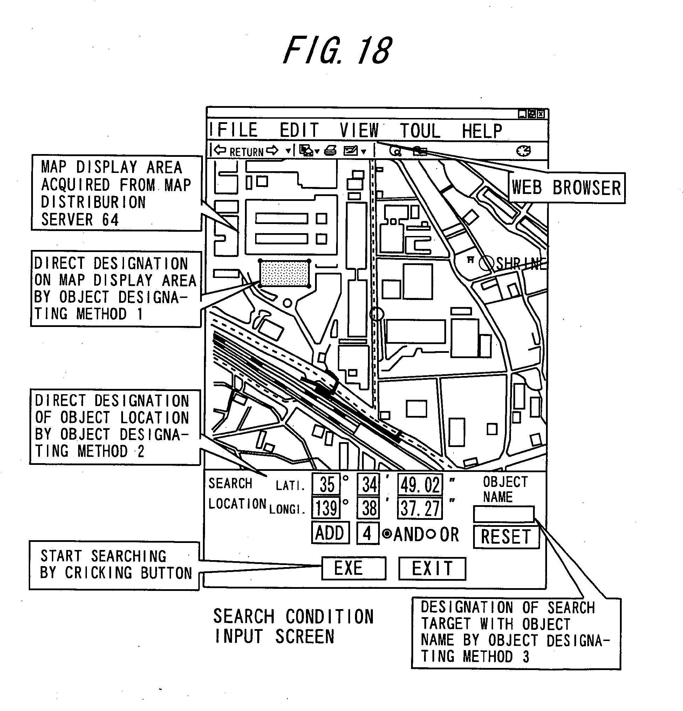

FIG. 18 is a view showing one example of a search condition input screen displayed on the video search terminal 2 realized by the PC and the Web Browser. In FIG. 18, the search condition input screen is generated based on the HTML (HyperText Markup Language) and the JavaScript (registered trademark). Map information (managed by the map DB 73 and stored in the map information storage 84) acquired via the network from the map distribution server 64 (FIG. 5) is displayed on the search condition input screen, wherein three types of object designating means are provided.

A first object designating means (object designating means 1) provides the user with a means for designating the object by use of a pointing device such as a mouse in a map display area. At this time, the user is enabled to designate and input a plurality of representative points on the map. Alternatively, an adoptable scheme is that when the user designates a predetermined on-map area by a rectangle and a polygon, shape characterizing points such as vertexes of the object embraced by the rectangle and the polygon are determined as the representative points.

When the on-map representative points are specified (inputted), the video search terminal 2 converts on-map pixel coordinates into coordinate values in the real space by JavaScript (registered trademark), and sets the values as a query about searching for the video. Further, the video search terminal 2 calculates an object size from the representative points, and also sets this size as a query about searching for the video. For example, a distance between two points distanced most among the representative points is used as the size.

A second object designating means (object designating means 2) directly provides the user with a means for designating the coordinate values of the representative points of the object. For instance, as shown in FIG. 18, a location of a desired object is inputted as a representative point(s) to a latitude/longitude input box provided on the search screen. When the plurality of representative points is inputted, the video search terminal 2 determines the object size in the same way as by the object designating means 1. If the designated coordinates represent one point, a rough estimate of the object size is inputted directly. The object designating means 2 is employed in the case of searching for the object of which the coordinate values have already been known.

A third object designating means (object designating means 3) provides the user with a means for designating the object with a proper noun. As for the objects such as the Land Mark that is frequently searched for, the representative points and the size of the object are managed by the object DB 72 (FIG. 5) (the representative points and the size of the object are stored in the object information storage 83).

The user can designate the object by inputting the proper noun of the object to an object name input box provided on the search screen. In this case, the video search terminal 2 notifies the video search server 63 (FIG. 5) of the object name, and the video search accesses the object DB 72 and replaces the object name with the same query (search condition) as those of the object designating means 1, 2, thereby executing the search process.

Upon clicking an execution button after determining the designation of the object, the object designating information (the query (the location of the representative point, the object size) about searching for the video, or the object name) is transmitted to the video search server 63 via the network 5. The video search server 63 searches, based on the location of the representative point and the object size, for the video of the object through the object search function described above, and sends a search result back to the video search terminal 2 (which corresponds to search means).

This scheme can be realized easily by configuring the video search server 63 with a CGI (Common Gateway Interface) program, wherein the search query is set as an argument to the CGI program, and the search result is sent back as HTML data representing the search result as a list.

In this example, the video search server 63, when receiving the search query, requests the video DB 71 to search for the metadata D3 associated with the search query. The video DB 71 hands over, to the video search server 63, the metadata D3 that is hit by use of the search index tree held in the video DB 71 itself or stored in the video metadata storage 82. The video search server 63 generates and sends MML (Mathematical Markup Language) data containing the hit metadata D3 back to the video search terminal 2.

An HTML screen for the search result is displayed based on the HTML data on the video search terminal 2. At this time, the Web Browser on the video search terminal 2 issues an video distribution request to the video distribution server 62 on the basis of a URL contained in the HTML data, and the video distribution server 62 reads the associated video data (thumbnail etc) from the video storage 81 and supplies the video data to the video search terminal 2.

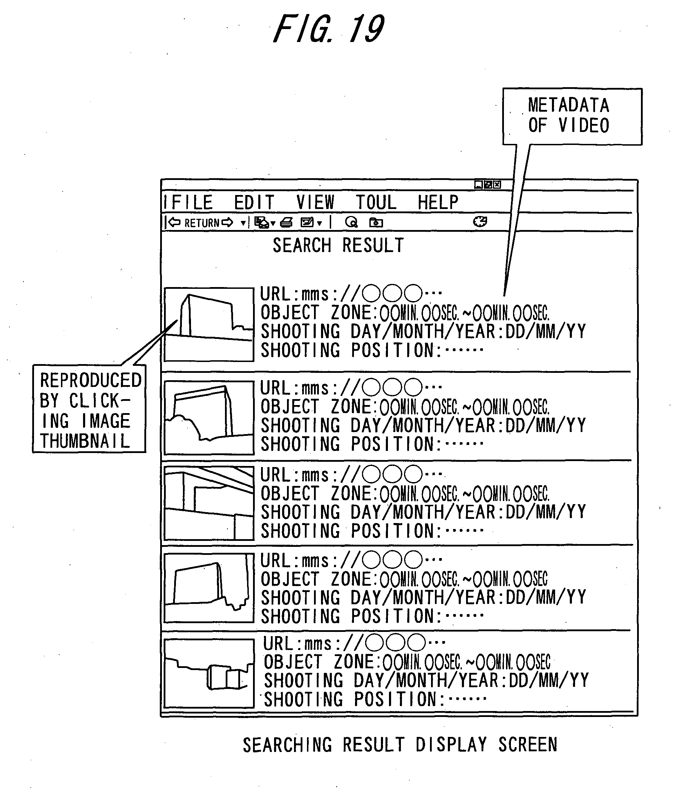

FIG. 19 is a diagram showing a display example of the HTML screen for the search result. The searched videos are displayed in a table format, wherein the thumbnail still images are displayed on the left side, while pieces of metadata are displayed on the right side. A link for displaying the video is embedded in the thumbnail still image, whereby when clicking the thumbnail, a video reproducing software component such as Windows Media Player (registered trademark) is started up, and the video can be confirmed.

Namely, the video collecting terminal 2 gives the video reproducing request via the network 5 to the video distribution server 62, and the video distribution server 62 reads the video data matching with the reproducing request from the video storage 81 and gives the video data as streaming data to the video search terminal 2. The video reproducing software component reproduces the video by use of the received streaming data.

<Operation Management Terminal>

Note that the operation management terminal 3 illustrated in FIG. 5 manages the object information and the map information in a way that accesses the object DB 73, the object information storage 83, the map DB 73 and the map information storage 84.

<Modified Example>

In the discussion made so far, the view volume and the MBR have been described on the two-dimensional plane, however, it is self-evident that there are the same functions and the same effects in a three-dimensional space. In the case of the three-dimensional space, the view volume becomes a quadrangle pyramidal shape from the trapezoidal shape, and the MBR takes a rectangular parallelepiped embracing the quadrangular pyramid.

It is to be noted that in the embodiment discussed above, the video data of the image-shot object is extracted by the search based on the MBRs and the index tree. It is not, however, strictly assured that the view volume includes the object.

A reason why so is that the MBR is nothing but the quadrangle embracing the view volume, and there exist coordinates which are within the MBR but are not contained in the view volume.

Hence, such a process may be added that the view volume is calculated per unit of record from the searched metadata D2 of the video data, and a strict object video segment is determined by checking the embracing relationship of how the object location is embraced in the view volume.

In the database disabled to do indexing based on the tree index, the index manipulation may be conducted outside the database, and only the metadata D3 (the table 2) may also be stored in the database without creating the index of the MBRs.

The latter case, though the efficiency is lower than in the case of using the tree index for extracting the record with the object location included in the MBR, has a merit that misdetection can be avoided as compared with the conventional methods because of checking the embracing relationship by use of the MBRs of the plural orders.

Industrial Applicability

In ubiquitous society that will, it is considered, be realized in the near future, the digital camera and the mobile phone having the built-in camera function as the video collecting terminals, and it is presumed that a massive quantity of video collection is actualized through the utilization of these terminals.

The present invention is related to the technology and the system for searching for the video segment in which to video the specified object from within the large quantity of video data accumulated in the server, and is, it is reckoned, applied to the whole local or online video search system that establishes the cooperative linkup with the video archives in the monitoring/disaster prevention/security fields and of enterprises or individuals.

For instance, when the system according to the present embodiment is applied to, e.g., the disaster prevention/disaster countermeasure fields, the videos collected by the citizens or disaster countermeasure organizations are accumulated in the server, and the video search terminal installed at the disaster countermeasure headquarter displays batchwise only the videos of the specified disaster-stricken area, thereby enabling a situation of the disaster to be grasped.

**Claims**

1. A video management system comprising:

   calculating means calculating, with respect to each of a plurality of size orders, a minimum bounding region (MBR) embracing a view volume that defines a range to be shot in real space based on pieces of data representing a shooting position and a shooting direction of a video; and
   management means storing, as data representing a shooting range of a video of a management target, data representing the MBR corresponding to each of the plurality of size orders that is calculated by said calculating means, in a storage.

2. The video management system according to claim 1, wherein said calculating means calculates the view volume in a range where an object having a specified size is shot in any one of patterns of being equal to or larger than a fixed pixel size and a fixed pixel count, and being equal to or larger than the fixed pixel size or the fixed pixel count as well as being equal to or larger than a fixed view angle.

3. The video management system according to claim 1 or 2, wherein said calculating means calculates an MBR embracing a view volume corresponding to each of a plurality of size orders that are previously defined according to an object size.

4. The video management system according to claim 3, further comprising search means determining, when a location and a size of an object are inputted, whether or not the location of the object is embraced by an MBR corresponding to a minimum size order in the plurality of size orders larger than the size of the object.

5. The video management system according to any one of claims 1 through 4, wherein said calculating means calculates an MBR of a view volume of a representative size order that is common to a plurality of videos being management targets, and calculates a plurality of MBRs of view volumes corresponding to a plurality of size orders defined for the plurality of videos, and
   said management means determines a tree structure for hierarchically managing the plurality of videos with the MBR corresponding to the representative size order, generates a tree by use of the tree structure, to store the tree in a storage, the tree including lowest-order nodes each holding data representing the MBRs corresponding to the representative size order and the plurality of size orders with respect to one of the plurality of videos that are calculated by said calculating means, the tree including nodes each having at least one lower-order node, each of the nodes having at least one lower-order node holding data representing an MBR of every size order embracing the respective MBR specified by the data representing the MBRs corresponding to the representative size order and the plurality of size orders held in all of lower-order nodes under the node itself.

6. The video management system according to claim 5, further comprising search means determining, as a search MBR, when a location and a size of an object are given, an MBR corresponding to a minimum size order included in size orders prepared in the tree that is larger than the size of the object, and extracting, as one of video search results, information relating to a video corresponding to the search MBR embracing the location of the object searched at a lowest-order node in the tree in a way that traces the search MBR embracing the location of the object sequentially from a root node of the tree.

7. The video management system according to any one of claims 1 through 6, wherein said calculating means calculates MBRs corresponding to a plurality of size orders with respect to a plurality of videos being management targets, and said management means determines, on the size order basis, tree structures for hierarchically managing the plurality of videos with the MBRs corresponding to the respective size orders, generates trees each corresponding to each of the plurality of size orders to be stored in a storage, each of the trees including lowest-order nodes each holding data representing the MBR corresponding to one of the plurality of size orders calculated by said calculating means, and including nodes each having at least one lower-order node, each of the nodes having at least one lower-order node holding data representing an MBR embracing the respective MBR based on the data representing the MBR corresponding to one of the plurality of size orders respectively managed by all of lower-order nodes under the node itself.

8. The video management system according to claim 7, further comprising search means determining, when a location and a size of an object are given, a size order being a minimum size order in the plurality of size orders that is larger than the size of the object, specifying one of the trees corresponding to the size order determined, and extracting, as one of video search results, information relating to a video corresponding to the MBR embracing the location of the object searched at a lowest-order node in the specified tree in a way that traces the MBR embracing the location of the object sequentially from a root node of the specified tree.

9. A video searching system comprising:

storage means holding, as pieces of data that define shooting ranges of a video being a management target, pieces of data representing minimum bounding regions (MBRs) each embracing a view volume showing a range to be shot in real space, wherein each MBR is calculated based on data representing a shooting position and a shooting direction of a video, and corresponds to one of a plurality of size orders; and

search means specifying, when a location and a size of an object being a search target are given, an MBR in said storage means corresponding to a minimum size order in the plurality of size orders that is larger than the size of the object, and extracting, as one of video search results, data relating to a video corresponding to the MBR specified when the specified MBR includes the location of the object.

10. The video searching system according to claim 9, wherein said storage means holds a tree for hierarchically managing a plurality of videos,
the tree has a tree structure determined based on MBRs, which are calculated according to a representative size order common to a plurality of videos, each corresponding to each of the plurality of videos,
respective lowest-order nodes in the tree hold data representing the MBR corresponding to the representative size order for the plurality of videos and representing a plurality of MBRs calculated according to the plurality of size orders defined based on one of the plurality of videos,
respective nodes including at least one lower-order node in the tree hold pieces of data representing an MBR of every size order embracing the respective MBR specified by the data representing the MBRs corresponding to the representative size order and the plurality of size orders held in all of lower-order nodes under the node itself,
said search means determining, as a search MBR, when a location and a size of an object are given, an MBR corresponding to a minimum size order included in size orders prepared in the tree that is larger than the size of the object, and extracting, as one of video search results, information relating to a video corresponding to the search MBR embracing the location of the object searched at a lowest-order node in the tree in a way that traces the search MBR embracing the location of the object sequentially from a root node of the tree.

11. A video management method executed by a computer, comprising:

calculating, with respect to each of a plurality of size orders, a minimum bounding region (MBR) embracing a view volume that defines a range to be shot in real space based on pieces of data representing a shooting position and a shooting direction of a video; and

storing, as data representing a shooting range of a video of a management target, data representing the MBR corresponding to each of the plurality of size orders in a storage.

**12.** The video management method according to claim 11, further comprising:

calculating an MBR of a view volume of a representative size order that is common to a plurality of videos being management targets, and calculating a plurality of MBRs of view volumes corresponding to a plurality of size orders defined for the plurality of videos;

determining a tree structure for hierarchically managing the plurality of videos with the MBR corresponding to the representative size order;

generating a tree by use of the tree structure; and

storing the tree in a storage, the tree including lowest-order nodes each holding data representing the MBRs corresponding to the representative size order and the plurality of size orders with respect to one of the plurality of videos, the tree including nodes each having at least one lower-order node, each of the nodes having at least one lower-order node holding data representing an MBR of every size order embracing the respective MBR specified by the data representing the MBRs corresponding to the representative size order and the plurality of size orders held in all of lower-order nodes under the node itself.

**13.** The video management method according to claim 12, further comprising:

determining, as a search MBR, when a location and a size of an object are given, an MBR corresponding to a minimum size order included in size orders prepared in the tree that is larger than the size of the object; and

extracting, as one of video search results, information relating to a video corresponding to the search MBR embracing the location of the object searched at a lowest-order node in the tree in a way that traces the search MBR embracing the location of the object sequentially from a root node of the tree.

**14.** A video searching method executed by a computer, comprising:

accessing, when a location and a size of an object being a search target are given, storage means holding, as pieces of data that define shooting ranges of a video being a management target, pieces of data representing minimum bounding rectangles (MBRs) each embracing a view volume showing a range to be shot in real space, wherein each MBR is calculated based on data representing a shooting position and a shooting direction of a video, and corresponds to one of a plurality of size orders;

specifying an MBR in said storage means corresponding to a minimum size order in the plurality of size orders that is larger than the size of the object; and

extracting, as one of video search results, data relating to a video corresponding to the MBR specified when the specified MBR includes the location of the object.

**15.** The video searching method according to claim 14, wherein said storage means holds a tree for hierarchically managing a plurality of videos,

the tree has a tree structure determined based on MBRs, which are calculated according to a representative size order common to a plurality of videos, each corresponding to each of the plurality of videos,

respective lowest-order nodes in the tree hold data representing the MBR corresponding to the representative size order for the plurality of videos and representing a plurality of MBRs calculated according to the plurality of size orders defined based on one of the plurality of videos,

respective nodes including at least one lower-order node, which includes at least one of the lowest-order nodes, in the tree hold pieces of data representing an MBR of every size order embracing the respective MBR specified by the data representing the MBRs corresponding to the representative size order and the plurality of size orders held in all of lower-order nodes under the node itself,

the searching method further comprises determining, as a search MBR, when a location and a size of an object are given, an MBR corresponding to a minimum size order included in size orders prepared in the tree that is larger than the size of the object, and extracting, as one of video search results, information relating to a video corresponding to the search MBR embracing the location of the object searched at a lowest-order node in the tree in a way that traces the search MBR embracing the location of the object sequentially from a root node of the tree.

**16.** A program for making a computer execute:

a step of calculating, with respect to each of a plurality of size orders, a minimum bounding region (MBR) embracing a view volume that defines a range to be shot in real space based on pieces of data representing a shooting position and a shooting direction of a video; and

a step of storing, as data representing a shooting range of a video of a management target, data representing the MBR corresponding to each of the plurality of size orders that is calculated by said calculating means, in a storage.

**17.** The program according to claim 16, further making said computer execute:

a step of calculating an MBR of a view volume of a representative size order that is common to a plurality of videos being management targets, and further calculating a plurality of MBRs of view volumes corresponding to a plurality of size orders defined for the plurality of videos;

a step of determining a tree structure for hierarchically managing the plurality of videos with the MBR corresponding to the representative size order;

a step of generating a tree by use of the tree structure; and

a step of storing the tree in a storage, the tree including lowest-order nodes each holding data representing the MBRs corresponding to the representative size order and the plurality of size orders with respect to one of the plurality of videos, the tree including nodes each having at least one lower-order node, each of the nodes having at least one lower-order node holding data representing an MBR of every size order embracing the respective MBR specified by the data representing the MBRs corresponding to the representative size order and the plurality of size orders held in all of lower-order nodes under the node itself.

**18.** The program according to claim 17, further making computer execute:

a step of determining, as a search MBR, when a location and a size of an object are given, an MBR corresponding to a minimum size order included in size orders prepared in the tree that is larger than the size of the object; and

a step of extracting, as one of video search results, information relating to a video corresponding to the search MBR embracing the location of the object searched at a lowest-order node in the tree in a way that traces the search MBR embracing the location of the object sequentially from a root node of the tree.

**19.** A program for making a computer execute:

a step of accessing, when a location and a size of a search target object are given, storage means holding, as pieces of data that define shooting ranges of a video being a management target, pieces of data representing minimum bounding regions (MBRs) each embracing a view volume showing a range to be shot in real space, wherein each MBR is calculated based on data representing a shooting position and a shooting direction of the video, and corresponds to one of a plurality of size orders;

a step of specifying an MBR in said storage means corresponding to a minimum size order in the plurality of size orders that is larger than the size of the object; and

a step of extracting, as one of video search results, data relating to a video corresponding to the MBR specified when the specified MBR includes the location of the object.

**20.** The program according to claim 19, wherein said storage means holds a tree for hierarchically managing a plurality of videos,

the tree has a tree structure determined based on MBRs, which are calculated according to a representative size order common to a plurality of videos, each corresponding to each of the plurality of videos,

respective lowest-order nodes in the tree hold data representing the MBR corresponding to the representative size order for the plurality of videos and representing a plurality of MBRs calculated according to the plurality of size orders defined based on one of the plurality of videos,

respective nodes including at least one lower-order node in the tree hold pieces of data representing an MBR of every size order embracing the respective MBR specified by the data representing the MBRs corresponding to the representative size order and the plurality of size orders held in all of lower-order nodes under the node itself,

the program making the computer further execute a step of determining, as a search MBR, when a location and a size of an object are given, an MBR corresponding to a minimum size order included in size orders prepared in the tree that is larger than the size of the object, and a step of extracting, as one of video search results, information relating to a video corresponding to the search MBR embracing the location of the object searched at a lowest-order node in the tree in a way that traces the search MBR embracing the location of the object sequentially from a root node of the tree.

# FIG. 1

MBR OF OBJECT
SIZE "100m"

MBR OF OBJECT
SIZE "10m"

MBR OF OBJECT
SIZE "1m"

O3

O2

O1

A

M1

B

M2

C

M3

## FIG. 2

DETERMINE TREE STRUCTURE WITH VIEW VOLUME
AND MBR OF REPRESENTATIVE OBJECT ORDER

MBR OF REPRESENTATIVE
OBJECT SIZE "10m"

N1

N2-1

N2-2

N3-1  N3-2  N3-3 N3-4 N3-5  N3-6

# FIG. 3

MBR OF OBJECT
SIZE "100m"

MBR OF OBJECT
SIZE "1m"

N1

N2-2

N2-1

CALCULATE MBRs OF RESPECTIVE ORDERS
FROM HIGH-ORDER DOWN TO LOW-ORDER
BASED ON TREE STRUCTURE

N3-1   N3-2   N3-3   N3-4   N3-5   N3-6

# FIG. 4

MBR OF ORDER (100m) OF MINIMUM SIZE LARGER THAN OBJECT (80m) TO BE SEARCHED FOR

03

N1

SEARCH FROM HIGH -ORDER DOWN TO LOW-ORDER ALONG TREE STRUCTURE BY REFERRING TO MBR OF SELECTED ORDER

N2-1

SEARCH HIT

N3-2

# FIG. 5

EP 1 871 105 A1

# FIG. 6

VIDEO COLLECTING TERMINAL 1

11 CAMERA

13 SENSOR

131 LOCATION MEASURING SENSOR

132 AZIMUTH MEASURING SENSOR

VIDEO DATA D1

META-DATA D2

14 COMMUNICATION MODULE

15 EXTERNAL MEMORY

10 PC

4 NETWORK

EP 1 871 105 A1

## FIG. 7

LIST 1   METADATA D2

```
DATE=181004, TIME= 71212, VTIME=2. 579, IGNR=0, DIME=3, LATT=N3535. 0910, LOGT=E13938. 4534, ERRH=8. 600000, ERRV=9. 000000, CMPS=219. 500000, ALTI =7. 315200
DATE=181004, TIME= 71214, VTIME=4. 615, IGNR=0, DIME=3, LATT=N3535. 0911, LOGT=E13938. 4533, ERRH=8. 600000, ERRV=9. 000000, CMPS=220. 300000, ALTI =7. 010400
DATE=181004, TIME= 71216, VTIME=6. 617, IGNR=0, DIME=3, LATT=N3535. 0912, LOGT=E13938. 4532, ERRH=8. 600000, ERRV=9. 000000, CMPS=220. 700000, ALTI =7. 315200
DATE=181004, TIME= 71218, VTIME=8. 619, IGNR=0, DIME=3, LATT=N3535. 0913, LOGT=E13938. 4532, ERRH=8. 600000, ERRV=9. 000000, CMPS=221. 000000, ALTI =7. 315200
DATE=181004, TIME= 71220, VTIME=10. 621, IGNR=0, DIME=3, LATT=N3535. 0914, LOGT=E13938. 4531, ERRH=8. 600000, ERRV=9. 000000, CMPS=220. 200000, ALTI =7. 010400
DATE=181004, TIME= 71222, VTIME=12. 590, IGNR=0, DIME=3, LATT=N3535. 0915, LOGT=E13938. 4531, ERRH=8. 600000, ERRV=9. 000000, CMPS=222. 000000, ALTI =7. 315200
DATE=181004, TIME= 71224, VTIME=14. 592, IGNR=0, DIME=3, LATT=N3535. 0915, LOGT=E13938. 4531, ERRH=8. 600000, ERRV=9. 000000, CMPS=222. 700000, ALTI =7. 315200
DATE=181004, TIME= 71226, VTIME=16. 594, IGNR=0, DIME=3, LATT=N3535. 0913, LOGT=E13938. 4531, ERRH=8. 600000, ERRV=9. 000000, CMPS=221. 300000, ALTI =7. 315200
DATE=181004, TIME= 71228, VTIME=18. 596, IGNR=0, DIME=3, LATT=N3535. 0905, LOGT=E13938. 4536, ERRH=9. 100000, ERRV=8. 800000, CMPS=150. 700000, ALTI =7. 315200
DATE=181004, TIME= 71230, VTIME=20. 598, IGNR=0, DIME=3, LATT=N3535. 0903, LOGT=E13938. 4545, ERRH=9. 200000, ERRV=8. 900000, CMPS=102. 700000, ALTI =7. 010400
DATE=181004, TIME= 71232, VTIME=22. 600, IGNR=0, DIME=3, LATT=N3535. 0912, LOGT=E13938. 4555, ERRH=8. 700000, ERRV=8. 900000, CMPS=46. 400000, ALTI =7. 315200
DATE=181004, TIME= 71234, VTIME=24. 602, IGNR=0, DIME=3, LATT=N3535. 0924, LOGT=E13938. 4560, ERRH=8. 700000, ERRV=8. 900000, CMPS=55. 000000, ALTI =7. 010400
DATE=181004, TIME= 71236, VTIME=26. 571, IGNR=0, DIME=3, LATT=N3535. 0939, LOGT=E13938. 4564, ERRH=8. 900000, ERRV=9. 000000, CMPS=54. 500000, ALTI =7. 010400
DATE=181004, TIME= 71238, VTIME=28. 606, IGNR=0, DIME=3, LATT=N3535. 0954, LOGT=E13938. 4566, ERRH=8. 700000, ERRV=9. 000000, CMPS=51. 100000, ALTI =7. 315200
DATE=181004, TIME= 71240, VTIME=30. 575, IGNR=0, DIME=3, LATT=N3535. 0969, LOGT=E13938. 4566, ERRH=8. 700000, ERRV=9. 000000, CMPS=24. 900000, ALTI =7. 010400
DATE=181004, TIME= 71242, VTIME=32. 610, IGNR=0, DIME=3, LATT=N3535. 0985, LOGT=E13938. 4566, ERRH=8. 700000, ERRV=9. 000000, CMPS=18. 700000, ALTI =7. 010400
DATE=181004, TIME= 71244, VTIME=34. 612, IGNR=0, DIME=3, LATT=N3535. 1001, LOGT=E13938. 4568, ERRH=8. 700000, ERRV=9. 000000, CMPS=19. 500000, ALTI =7. 010400
DATE=181004, TIME= 71246, VTIME=36. 581, IGNR=0, DIME=3, LATT=N3535. 1016, LOGT=E13938. 4569, ERRH=8. 700000, ERRV=9. 000000, CMPS=12. 800000, ALTI =6. 705600
DATE=181004, TIME= 71248, VTIME=38. 583, IGNR=0, DIME=3, LATT=N3535. 1032, LOGT=E13938. 4570, ERRH=8. 900000, ERRV=9. 000000, CMPS=12. 900000, ALTI =7. 315200
            :
```

EP 1 871 105 A1

## FIG. 8

TABLE 1   PARAMETER OF METADATA D2

| PARAMETER NAME | CONTENTS |
|---|---|
| DATE | SHOOTING DATE(UTC), DAY(2 DIGITS)+ MONTH(2 DIGITS)+YEAR OF CHRIST (LAST 2 DEGITS) |
| TIME | SHOOTING TIME,  TIME (1-2 DIGITS)+ MINUTE (2 DIGITS)+ SECOND |
| VTIME | MEASURING TIME (SEC) WHEN VIDEO START TIME IS SET TO 0 SEC. |
| IGNR | LOCATION DATA INVALID FRAG. 0: VALID, 1: INVALID. |
| DIME | LOCATION MEASURING MODE. 2: 2D LOCATION MEASUREMENT, 3: 3D MEASUREMENT |
| LATT | LATITUDE.   {N:NORTH LATITUDE, S:SOUTH LATITUDE} + DEGREE + MINUTE(2 DIGITS)+'.  ' + SECOND(INTEGER PART 2 DIGITS + DECIMAL FRACTION PART 2 DIGITS) |
| LOGT | LONGITUDE.  {E:EAST LONGITUDE, W:WEST LONGITUDE} +DEGREE+MINUTE(2 DIGITS)+' . ' +SECOND(INTEGER PART 2 DIGITS + DECIMAL FRACTION PART 2 DIGITS) |
| ERRH | HORIZONTAL-DIRECTION ERROR OF LOCATION DATA. UNIT IS "m(METER)". |
| ERRV | VERTICAL-DIRECTION ERROR OF LOCATION DATA. UNIT IS "m(METER)". |
| CMPS | OPTICAL-AXIS DIRECTION (ANGLE-OF-DIRECTION $\theta$) WHEN VIDEO IS SHOT. |
| ALTI | ALTITUDE. UNIT IS "m(METER)". |

EP 1 871 105 A1

# FIG. 9

**CALCULATION OF VIEW VOLUME**

# FIG. 10

MBR PER UNIT OF RECORD

MBR OF WHOLE VIDEO DATA

Y

X

REFERENCE ORIGIN

MBR OF VIDEO DATA

# FIG. 11

DETERMINATION OF FAR PLANE DISTANCE

## FIG. 12

TABLE 2  PARAMETER OF METADATA D3

| PARAMETER NAME | CONTENTS |
|---|---|
| ID | ID OF METADATA D3 |
| URL | LINK TO VIDEO DATA D1m STORED IN VIDEO STORAGE 81 |
| METADATA | STORAGE AREA OF METATDATA D2 OF VIDEO DATA D1m |
| MBR-0 | REPRESENTATIVE MBR ($\overline{MBR(m)}$) |
| MBR-1 | MBR (MBR(m, 1)) WHEN OBJECT SIZE IS $O_1$ |
| ⋮ | |
| MBR-S | MBR (MBR(S, 1)) WHEN OBJECT SIZE IS $O_S$ |

EP 1 871 105 A1

# FIG. 13

NODE DATA (CNode)

+entryLength:int[1]
+entry:CEntry*[m..M]
+parent:CNode*[1]

NODE ENTRY (CNodeEntry)

+child:CNode*[1]
+MBR:CRect[S+1]

ENTRY (CEntry)

+MBR:CRect[S+1]

METADATA (CMeta)

+id:int[1]
+url:char[]
+metadata:....
+MBR:CRect[S+1]

LEAF ENTRY (CLeafEntry)

+mata:CMeta*[1]
+MBR:CRect[S+1]

1, parent
1, entry
1, entry
m..M
m..M
1, child
1
1, mata

IT IS ROOT OF TREE WHEN parent=NULL,
entry:CEntry*[1..M] ONLY WHEN BEING ROOT

PROJECTION PLANE

METADATA D3 STORED IN
METADATA STORAGE 82

DATA STRUCTURE OF TREE INDEX

EP 1 871 105 A1

# FIG. 14

EXAMPLE OF TREE INDEX

EP 1 871 105 A1

# FIG. 15

[3] STORE OR REGION OF MBR OF NODE ENTRY AS MBR VALUE OF HIGH-ORDER NODE ENTRY ([3] IS REPEATED UP TO ROOT NODE)

[2] STORE OR REGION OF MBR OF LEAF ENTRY AS MBR VALUE OF HIGH-ORDER NODE ENTRY (REFER TO [3])

[1] COPY MBR OF METADATA TO MBR OF LEAF ENTRY

CNode — CNodeEntry — CNode — CNodeEntry — CLeafEntry — CMeta

| CNode | CNodeEntry | CNode | CNodeEntry | CLeafEntry | CMeta |
|---|---|---|---|---|---|
| ROOT | NODE ENTRY (1) | NODE | NODE ENTRY (1) | LEAF ENTRY (1) | METADATA (1) |
| | NODE ENTRY (2) | | NODE ENTRY (2) | LEAF ENTRY (2) | METADATA (2) |
| | ⋮ | | NODE ENTRY (3) | LEAF ENTRY (3) | METADATA (3) |
| | NODE ENTRY (entry Location) | | ⋮ | ⋮ | METADATA (4) |
| | ⋮ | | NULL (M) | NULL (M) | METADATA (5) |
| | NULL (M) | NODE | NODE ENTRY (1) | LEAF ENTRY (1) | METADATA (6) |
| | | | NODE ENTRY (2) | LEAF ENTRY (2) | METADATA (7) |
| | | | NODE ENTRY (3) | LEAF ENTRY (3) | METADATA (8) |
| | | | ⋮ | ⋮ | METADATA (9) |
| | | NODE | NULL (M) | NULL (M) | METADATA (10) |

MBR CALCURATION

EP 1 871 105 A1

## FIG. 16

REPRESENTATIVE POINT

Y

REPRESENTATIVE POINT
$Q_{location}[1..]$

OBJECT
SIZE
$Q_{size}$

OBJECT

REFERENCE ORIGIN

X

OBJECT SIZE AND REPRESENTATIVE POINT

EP 1 871 105 A1

# FIG. 17

[1] OBTAIN MINIMUM "s" THAT ESTABLISHES Qsize≦Qs

[2] SEARCH FOR LOW-ORDER NODES IF Qlocation⊂MBR[s]

[2]' STOP SEARCHING FOR LOW-ORDER NODE IF Qlocation⊄MBR[s]

[3] LIST UP id(=10) OF METADATA IF Qlocation⊂MBR[s]

CNode  CNodeEntry

ROOT — NODE ENTRY (1), NODE ENTRY (2), .. , NODE ENTRY (entry Location), NULL (M)

CNode  CNodeEntry

NODE — NODE ENTRY (1), NODE ENTRY (2), NODE ENTRY (3), .. , NULL (M)

NODE — NODE ENTRY (1), NODE ENTRY (2), NODE ENTRY (3), .. , NULL (M)

NODE

CLeafEntry

LEAF ENTRY (1), LEAF ENTRY (2), LEAF ENTRY (3), .. , NULL (M)

LEAF ENTRY (1), LEAF ENTRY (2), LEAF ENTRY (3), .. , NULL (M)

CMeta

METADATA (1)
METADATA (2)
METADATA (3)
METADATA (4)
METADATA (5)
METADATA (6)
METADATA (7)
METADATA (8)
METADATA (9)
METADATA (10)

SEARCH

SEARCH FOR OBJECT VIDEO

EP 1 871 105 A1

# FIG. 18

MAP DISPLAY AREA
ACQUIRED FROM MAP
DISTRIBURION
SERVER 64

DIRECT DESIGNATION
ON MAP DISPLAY AREA
BY OBJECT DESIGNA-
TING METHOD 1

DIRECT DESIGNATION
OF OBJECT LOCATION
BY OBJECT DESIGNA-
TING METHOD 2

START SEARCHING
BY CRICKING BUTTON

WEB BROWSER

|FILE   EDIT   VIEW   TOUL   HELP

SEARCH   LATI.   35° 34′ 49.02″   OBJECT NAME
LOCATION LONGI. 139° 38′ 37.27″
ADD  4 ●AND○OR   RESET
EXE   EXIT

SEARCH CONDITION
INPUT SCREEN

DESIGNATION OF SEARCH
TARGET WITH OBJECT
NAME BY OBJECT DESIGNA-
TING METHOD 3

38

# FIG. 19

METADATA OF VIDEO

REPRODUCED BY CLICK-ING IMAGE THUMBNAIL

IFILE  EDIT  VIEW  TOUL  HELP

⇦ RETURN ⇨ ▾ | 🔖▾ 🖨 ☑▾ | ⊝ 📷          ♻

SEARCH RESULT

URL:mms://◯◯◯…
OBJECT ZONE:OOMIN.OOSEC.~OOMIN.OOSEC.
SHOOTING DAY/MONTH/YEAR:DD/MM/YY
SHOOTING POSITION:……

URL:mms://◯◯◯…
OBJECT ZONE:OOMIN.OOSEC.~OOMIN.OOSEC.
SHOOTING DAY/MONTH/YEAR:DD/MM/YY
SHOOTING POSITION:……

URL:mms://◯◯◯…
OBJECT ZONE:OOMIN.OOSEC.~OOMIN.OOSEC.
SHOOTING DAY/MONTH/YEAR:DD/MM/YY
SHOOTING POSITION:……

URL:mms://◯◯◯…
OBJECT ZONE:OOMIN.OOSEC.~OOMIN.OOSEC
SHOOTING DAY/MONTH/YEAR:DD/MM/YY
SHOOTING POSITION:……

URL:mms://◯◯◯…
OBJECT ZONE:OOMIN.OOSEC.~OOMIN.OOSEC
SHOOTING DAY/MONTH/YEAR:DD/MM/YY
SHOOTING POSITION:……

SEARCHING RESULT DISPLAY SCREEN

# FIG. 20

OBJECT LOCATION

VIEW VOLUME (SHOOTING SPACE)

Y

FAR PLANE

θ OPTICAL-AXIS DIRECTION

MBR

POSITION COORDINA-TES (x, y)

NEAR PLANE

X

## *FIG. 21*

MBR EMBRACING WHOLE VIDEO DATA

MBR OF VIDEO SUBDATA

OBJECT LOCATION TO BE SEARCHED FOR

HIERARCHIZATION (GENERATE TREE INDEX)

## FIG. 22

LARGE OBJECT LOCATED FAR FAILS TO BE SEARCHED FOR EVEN IF VISIBLE IN VIDEO BECAUSE THE OBJECT IS NOT INCLUDED IN MBR.

SMALL OBJECT INCLUDED IN MBR IS SEARCHED FOR. HOWEVER, THE OBJECT IS NOT VISIBLE IN VIDEO BECAUSE IT IS TOO SMALL.

Y

OBJECT=CAR

FAR PLANE

VIEW VOLUME (SHOTTING SPACE) SUITABLE FOR CAR

MBR

NEAR PLANE

X

EP 1 871 105 A1

## INTERNATIONAL SEARCH REPORT

| | International application No. |
|---|---|
| | PCT/JP2005/005907 |

**A. CLASSIFICATION OF SUBJECT MATTER**
Int.Cl$^7$ H04N5/76, G06F17/30, G06T1/00, H04N5/225

According to International Patent Classification (IPC) or to both national classification and IPC

**B. FIELDS SEARCHED**

Minimum documentation searched (classification system followed by classification symbols)
Int.Cl$^7$ H04N5/76, G06F17/30, G06T1/00, H04N5/225

Documentation searched other than minimum documentation to the extent that such documents are included in the fields searched
Jitsuyo Shinan Koho          1922-1996   Jitsuyo Shinan Toroku Koho   1996-2005
Kokai Jitsuyo Shinan Koho   1971-2005   Toroku Jitsuyo Shinan Koho   1994-2005

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | Takahiko OOTA et al., "Gazo kara no Object Teigi Jido Chushutsu Shuho no Kenkyu", IEICE Technical Report (PRMU2002-243 to 263 Pattern Ninshiki · Media Rikai), Vol.102, No.708, 07 March, 2003 (07.03.03), pages 93 to 98 | 1-20 |
| A | JP 7-49964 A  (Matsushita Electric Industrial Co., Ltd.), 21 February, 1995 (21.02.95), Full text; all drawings & US 5577175 A          & EP 638875 A3 | 1-20 |
| A | JP 2004-7271 A  (Matsushita Electric Industrial Co., Ltd.), 08 January, 2004 (08.01.04), Full text; all drawings & WO 2003-102953 A1 | 1-20 |

| ☐ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 03 June, 2005 (03.06.05) | 21 June, 2005 (21.06.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11282851 A

- JP 9259130 A

**Non-patent literature cited in the description**

- **GUTTMAN, A.** R-Trees: A Dynamic Index Structure for Spatial Searching. *Proc of the 1984 ACM SIGMOD Int'1 conf on Mgmt f Data,* 45-57